Europäisches Patentamt

European Patent Office

Office européen des brevets

(19)

(11) Veröffentlichungsnummer: **0 244 406 B1**

(12) **EUROPÄISCHE PATENTSCHRIFT**

(45) Veröffentlichungstag der Patentschrift: **21.11.91**

(51) Int. Cl.⁵: **F16F 15/00**, F01D 5/26, G10K 11/16

(21) Anmeldenummer: **86900076.0**

(22) Anmeldetag: **28.12.85**

(86) Internationale Anmeldenummer:
**PCT/DE85/00564**

(87) Internationale Veröffentlichungsnummer:
**WO 86/04126 (17.07.86 86/17)**

(54) **SCHWINGUNGSDÄMPFEND AUSGEBILDETER GEGENSTAND.**

(30) Priorität: **28.12.84 DE 3447655**

(43) Veröffentlichungstag der Anmeldung:
**11.11.87 Patentblatt 87/46**

(45) Bekanntmachung des Hinweises auf die Patenterteilung:
**21.11.91 Patentblatt 91/47**

(84) Benannte Vertragsstaaten:
**AT BE CH DE FR GB IT LI LU NL SE**

(56) Entgegenhaltungen:

| | |
|---|---|
| EP-A- 11 079 | WO-A-81/00898 |
| DE-A- 1 575 168 | DE-A- 2 127 067 |
| DE-A- 2 135 946 | DE-B- 1 300 741 |
| DE-C- 1 162 137 | FR-A- 1 577 608 |
| FR-A- 2 170 626 | FR-A- 2 547 227 |
| GB-A- 2 020 779 | US-A- 3 110 369 |
| US-A- 3 473 853 | US-A- 3 545 565 |
| US-A- 4 134 309 | |

See also references of WO8604126

(73) Patentinhaber: **BRENDEL, Hubert**
**Axöder Höhe 1**
**W-8330 Eggenfelden(DE)**

(72) Erfinder: **BRENDEL, Hubert**
**Axöder Höhe 1**
**W-8330 Eggenfelden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 244 406 B1

## Beschreibung

Die Erfindung betrifft besonders schwingungsdämpfend ausgebildete Gegenstände. Ihre Wirkung beruht auf schwingungsbedingter Verdrängung von Fluid in dünnen Spalten. Die Spalte sind üblicherweise einer schwingungsbedingten maximalen Dickenänderung von weniger als 1 mm ausgesetzt und auch bei solchen von nur 0.0001 mm ergibt sich noch eine Schwingungsdämpfung. Ausführungsformen der Erfindung sind auch Schweißverbindungen, die in druckdicht abgeschlossene dünne Spalte eingepreßtes Fluid beinhalten.

Im Werkzeugmaschinenbau ist es bekannt, daß die Schwingungsdämpfung bei Maschinen größtenteils auf der Dämpfung in sogenannten festen und beweglichen Fugenverbindungen, wie zum Beispiel Schraub- und Schweißverbindungen oder Gleitführungen, beruht. Forschungsergebnisse verschiedener deutscher Hochschulinstitute führen die Dämpfungseigenschaften dynamisch belasteter fester Fugenverbindungen auf Verdrängungseffekte der zwischen den Fugenflächen befindlichen Luft und eventueller Flüssigkeiten, wie beispielsweise Öl, zurück. Vor allem eingeölte Fugenverbindungen zeigen eine relativ hohe Dämpfungswirkung.

Die besonders dämpfungserhöhende Wirkung des Einölens von Fugenverbindungen ist nur für waagrecht angeordnete Fugenflächen sinnvoll ausnutzbar, da sonst das Öl aufgrund des Einflusses der Schwerkraft zu schnell wieder entweicht. Es verbleibt jedoch selbst in waagrechten Fugenflächen über längere Zeit nur ein Bruchteil der ursprünglichen Ölmenge. Werden bei der Montage einer Maschine deren Fugenflächen eingeölt, so erweist sich deshalb die dadurch erzielte Verbesserung der Dämpfung nur von beschränkter Dauer.

Aus der Dissertation von B. Schaible "Ermittlung des statischen und dynamischen Verhaltens insbesondere der Dämpfung von verschraubten Fugenverbindungen für Werkzeugmaschinen", TU München, 1976, ist bekannt, daß in der Fugenverbindung zweier Bauteile das Auftreten von Schwingungen in deren Frequenz periodische Änderungen der Fugenspaltdicke bewirkt, die nur in Ausnahmefällen in der gesamten Fugenfläche gleichartig auftreten und vom selben Betrag sind. Insbesondere bei Biegeschwingungen miteinander verbundener Bauteile stellen sich unterschiedliche Änderungen der Fugenspaltdicke ein. Erweitert sich in einer eingeölten Fugenverbindung an einer bestimmten Stelle der Fugenspalt während einer Schwingungsperiode, so wird das Öl durch die Kapilaritätswirkung und den atmosphärischen Druck, dem es in der Fugenverbindung ausgesetzt ist, entgegen auftretender relativ großer Strömungswiderstände nur sehr geringfügig in den so kurzzeitig entstehenden Hohlraum eingepreßt, bevor der Fugenspalt sich schon wieder verengt und das Öl an seinen Ursprungsort zurückdrängt. Das Volumen des auf diese Weise während einer Schwingungsperiode reversibel strömenden Öls ist somit nur ein Bruchteil des gesamten in der Fugenverbindung in der Frequenz der Schwingung sich periodisch ändernden Spaltvolumens. Die bei Schwingungen in einer eingeölten Fugenverbindung stets auftretenden, unvermeidlichen Fugenspaltdickenänderungen werden folglich nur ungenügend dämpfungswirksam genutzt.

Dies ließe sich ändern, wenn in einer entsprechend abgedichteten Fugenverbindung Öl unter möglichst hohem Druck zugeführt wird, was durch die bekannt hohe Dämpfungswirkung hydrostatischer Führungen bestätigt wird. Der hierzu erforderliche Investitions- und Wartungsaufwand ist jedoch wirtschaftlich meistens nicht vertretbar. Die Dämpfungswirkung des sogenannten Squeeze-Film-Effekts, wie er zum Beispiel in der EP-A-11079 beschrieben ist, kann deshalb in der Regel mit herkömmlichen Mitteln nur sehr eingeschränkt genutzt werden.

In der US-A-3473853 und in der FR-A-2170626 sind Einrichtungen zur Dämpfung von Radialschwingungen wälzgelagerter Rotoren von Gasturbinen beziehungsweise elektrischen Maschinen offenbart. Sie sind jeweils zwischen dem Wälzlageraußenring und dem Maschinengehäuse angeordnet und bestehen aus einem dünnwandigen biegsamen Membranring, der mit einem weiteren Ring verschweißt ist und einen mit Flüssigkeit gefüllten Ringspalt einschließt. Derartige Dämpfungseinrichtungen blieben in ihrer Anwendung jedoch auf die speziellen Verhältnisse von Wellenlagerungen beschränkt.

Aufgabe der Erfindung ist es deshalb, Gegenstände, wie feste schwingungsdämpfende Fugenverbindungen, schwingungsdämpfende Flachdichtungen und Fugendämpfer, anzugeben, die den Effekt der schwingungsdämpfenden Wirkung von in dünnen Spalten eingeschlossenen Fluiden in erhöhtem Maß zeitlich unbeschränkt und vielseitiger nutzbar machen.

Diese Aufgabe wird durch den Patentansprüchen entsprechende Gegenstände gelöst, die mindestens einen Fluid beinhaltenden dünnen Spalt einschließen, wobei durch schwingungsbedingte Kräfte dieser Spalt in seiner Dicke unter Fluidverdrängung verändert wird. Ausführungsformen der Erfindung entstehen auch, indem in von Schweißverbindungen druckdicht abgeschlossene Spalte Fluid eingepreßt wird. Weitere erfindungsgemäße.Ausführungsformen sind in den Patentansprüchen festgelegt.

Der Hauptvorteil der Erfindung beruht auf der durch den angewandten Squeeze-Film-Effekt sich ergebenden extrem hohen Dämpfungswirkung, selbst bei Schwingungsamplituden von nur 0.0001 mm.

Entgegen gebräuchlicher Anwendungen des Squeeze-Film-Effekts erfordern die erfindungsgemäßen Ausführungsformen keinerlei Hilfsenergie. Die Erfindung kann deshalb sowohl bei Maschinen, Geräten als auch Bauwerken selbst nachträglich noch Anwendung finden. Sie kann so deren Schwingungseigenschaften, gekennzeichnet durch die sogenannte dynamische Nachgiebigkeit, sowie ihr Geräuschverhalten erheblich verbessern.

Wird eine Ausführungsform des Erfindungsgedankens in der verschraubten Fugenverbindung einer Maschine angewendet, so kann das eine Erhöhung ihrer statischen Steifigkeit zur Folge haben. Dieser Effekt läßt sich zurückführen auf einen verbesserten Kontakt insbesondere derjenigen Teilflächen der Fugenverbindung, die den größten Abstand zur nächstgelegenen Schraube aufweisen. Die Dämpfungseinrichtung bewirkt somit eine bessere Druckverteilung in einer solchen Fugenverbindung. Diese hat deshalb selbst bei thermisch bedingten Verwölbungen der Fugenflächen bessere Voraussetzungen zur Abdichtung gegenüber Fluiden und kann auch einen größeren Wärmeübergang zwischen den Fugenflächen aufweisen.

Weitere Vorzüge erfindungsgemäßer Ausführungsformen ergeben sich aus den Ansprüchen, der nachfolgenden Beschreibung sowie den Zeichnungen von Ausführungsbeispielen des Erfindungsgedankens.

Im folgenden werden die Erfindung und einige bevorzugte Ausführungsformen der Erfindung anhand von Abbildungen erläutert. Diese zeigen mit Fluid gefüllte Spalte, die teilweise in ihrer Dicke der Deutlichkeit halber extrem vergrößert dargestellt sind.

Die der Beschreibung und den Abbildungen zu entnehmenden Merkmale können bei anderen Ausführungsformen der Erfindung einzeln für sich oder zu mehreren in beliebiger Kombination Anwendung finden.

Es zeigt:

Fig. 1      den der Erfindung zugrunde liegenden physikalischen Effekt am idealisierten Beispiel eines Schnitts durch eine sogenannte feste Fugenverbindung zweier Bauteile;

Fig. 2      den Schnitt parallel zur schmäleren Seite eines erfindungsgemäßen Fugendämpfers mit rechteckiger Grundfläche;

Fig. 3      den Schnitt durch einen erfindungsgemäßen quadratischen Fugendämpfer mit einer mittensymmetrisch angeordneten Folie;

Fig. 4      den Schnitt durch einen Fugendämpfer wie in Fig. 3, in dem jedoch mehrere Folien angeordnet sind;

Fig. 5      den Schnitt durch einen Fugendämpfer mit besonderer erfindungsgemäßer Abstützung;

Fig. 6      den Schnitt durch einen auf andere Art erfindungsgemäß abgestützten Fugendämpfer;

Fig. 7      den Schnitt durch eine weitere Art der erfindungsgemäßen Abstützung eines Fugendämpfers;

Fig. 8      den Schnitt durch den in einer verschraubten Fugenverbindung angeordneten erfindungsgemäßen Fugendämpfer, wie er in Fig. 9 im kleineren Maßstab in der Draufsicht dargestellt ist;

Fig. 9      die Draufsicht auf einen Fugendämpfer;

Fig. 10      den Schnitt durch eine insbesondere für größere Serien bevorzugte Ausführungsform des Erfindungsgedankens, die eine Flachdichtung ersetzt;

Fig. 11      den Schnitt durch eine weitere Ausführungsform eines erfindungsgemäßen Fugendämpfers;

Fig. 12      die Draufsicht auf eine für die Benutzung der Erfindung besonders vorteilhaft ausgebildete Kontaktfläche einer Schraubenverbindung;

Fig. 13      den Schnitt A-A durch die Kontaktfläche von Fig. 12;

Fig. 14      die Draufsicht auf die Kontaktfläche der Fig. 12 und einen erfindungsgemäßen Fugendämpfer;

Fig. 15      den Schnitt durch den in einem Getriebegehäuse angeordneten, erfindungsgemäßen Fugendämpfer;

Fig. 16      den Schnitt durch eine nach dem Erfindungsgedanken ausgestaltete dämpfungswirksame Schweißverbindung;

Fig. 17      den Schnitt durch eine weitere erfindungsgemäße Schweißverbindung;

Fig. 18      den Schnitt durch eine andere, dem Erfindungsgedanken entsprechende Ausführungsform einer Schweißverbindung;

Fig. 19      den Schnitt durch eine weitere nach dem Erfindungsgedanken ausgestaltete Schweißverbindung und

Fig. 20      den Längsschnitt einer erfindungsgemäß ausgebildeten Schweißverbindung zweier Stangen.

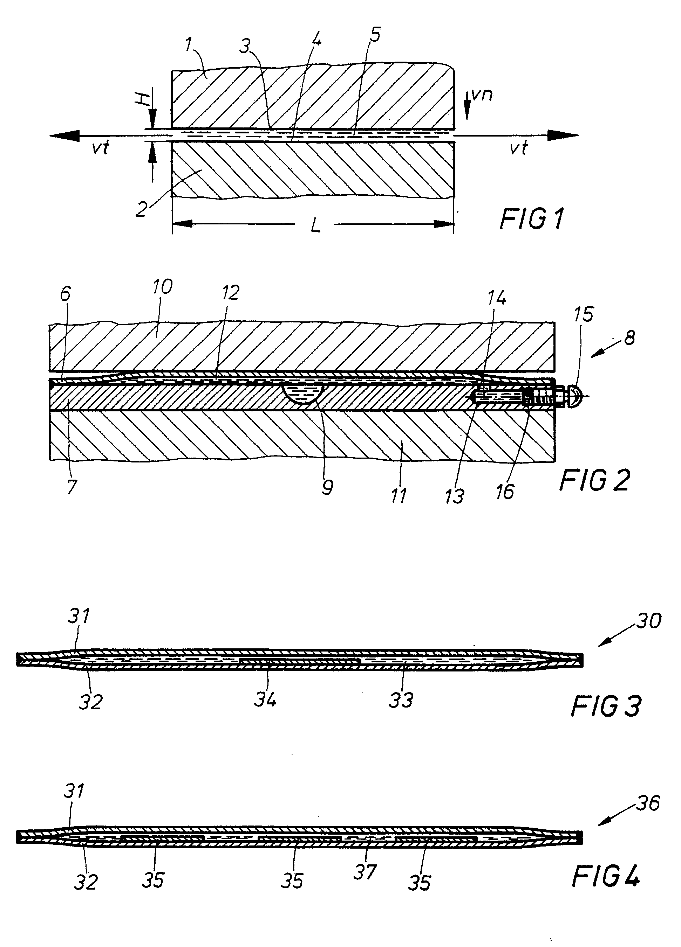

Fig. 1 zeigt idealisiert den Schnitt durch zwei miteinander, mittels nicht dargestellter Schrauben verbundener Bauteile 1, 2, die einen extrem vergrößert dargestellten dünnen Spalt 5 von der Dicke H miteinander bilden. In diesem Spalt befindet sich ein Fluid, wie beispielsweise Hydrauliköl. Unterliegt nun zum Beispiel Bauteil 1 einer schwingenden Beanspruchung, und wird infolgedessen der mit dem relativ ruhenden Bauteil 2 gebildete Spalt zu einem gewissen Zeitpunkt mit der Geschwindigkeit vn verkleinert, so entweicht das hier als inkompressibel betrachtete Fluid unter der Annahme einer eindimensionalen Strömung mit der Geschwindigkeit vt = 0.5*vn*L/H aus dem Spalt. Das mit hoher Geschwindigkeit verdrängte Fluid ist aufgrund seiner Viskosität an den Fugenoberflächen 3, 4 Reibungskräften ausgesetzt, wodurch schwingungsdämpfend kinetische Energie in Wärmeenergie umgesetzt wird. Nach der einschlägigen Literatur, wie zum Beispiel der Veröffentlichung von P. Vanherck mit dem Titel "Dimensioning of Fluid Film Dampers" in der Zeitschrift Annals of the C.I.R.P. 17, 1969, Seite 65-72, ist die beschriebene Energiedissipation in einem mit Fluid gefüllten Spalt - nachfolgend als Fluidspalt bezeichnet - proportional zur dynamischen Viskosität des Fluids, umgekehrt proportional zur 3. Potenz der Dicke des Fluidspalts und bei einer nur auf eine Richtung beschränkten dynamischen Fluidströmung in einem Fluidspalt quadratischer Fläche proportional zur 4. Potenz der Quadratseitenlänge. Auf diesem, als Squeeze-Film-Effekt bekannten, in Fig. 1 vereinfachend nur eindimensional dargestellten Vorgang der Fluidverdrängung in einem Spalt beruht die Dämpfungswirkung aller erfindungsgemäßer Ausführungsformen.

Bei den nachfolgend aufgezeigten Beispielen des ausgeführten Erfindungsgedankens wird der Begriff "Fluid" als Bezeichnung sowohl für Gase als auch Flüssigkeiten verwendet und kann grundsätzlich auch Gemische verschiedenartiger Flüssigkeiten und/oder Gase mit insbesondere unterschiedlicher Viskosität und Kompressibilität bedeuten.

Erfindungsgemäße Ausführungsformen können auch mit einem einzigen Fluid sowohl flüssigen als auch gasförmigen Zustands gefüllt sein. Derartige Fluide, wie beispielsweise Frigen, halten den Fluiddruck auch bei relativ sehr großen Spaltvolumenänderungen aufrecht.

Der an Fig. 1 erläuterte Squeeze-Film-Effekt zeigt bei allen Fluiden, auch wenn sie als kompressibel betrachtet werden müssen, eine hohe Dämpfungswirksamkeit, wenn die Geometrie des von den Bauteilen 1, 2 gebildeten Spalts 5 entsprechend auf die Viskosität des verwendeten Fluids, die Frequenz der zu dämpfenden Schwingungen und andere Randbedingungen abgestimmt ist.

Aufgrund des angewandten physikalischen Prinzips der Dämpfung unterliegt das Fluid einer Scherbeanspruchung, weswegen es, wie beispielsweise Wasser, chemisch möglichst stabil sein soll, damit nicht durch eine sonst begünstigte Veränderung seiner Molekülstruktur die Fluidviskosität in ihrem Betrag unerwünscht beeinflußt wird. In der Mehrzahl der Anwendungsfälle des Erfindungsgedankens werden Fluide vorzuziehen sein, deren dynamische Viskosität bei der Temperatur des sie einschließenden Gegenstands im Bereich von 1 - 1000 mPas (milli-Pascal-Sekunde) liegt (1 mPas = 1 cP). Es sind jedoch auch Fluide verwendbar des Viskositätsbereichs $10^{-2}$ - $10^{+6}$ mPas und selbst Fluide außerhalb dieses Viskositätsbereichs sind hierfür nicht ausgeschlossen. Allgemein gilt dabei, daß mit abnehmender Viskosität des eingesetzten Fluids die Frequenz der zu dämpfenden Schwingungen zunehmen soll und die Dicke des optimalen dämpfungswirksamen Fluidspalts kleiner wird.

Neben den genannten Kriterien für die Auswahl des Fluids sind unter anderem noch folgende Fluideigenschaften von je nach Einsatzfall unterschiedlicher Bedeutung: Korrosionsschutzwirkung, Brennbarkeit, Alterungsbeständigkeit, Pumpfähigkeit, Kriechfähigkeit, Farbe, Stockpunkt, Siedepunkt, Umweltverträglichkeit, Viskositätstemperaturabhängigkeit, Dampfdruck, Preis.

Fig. 2 zeigt als ein Ausführungsbeispiel der Erfindung den Schnitt parallel zur schmäleren Seite eines Fugendämpfers 8 mit rechteckiger Grundfläche, der vollständig mit Fluid, wie beispielsweise Getriebeöl, gefüllt und zwischen zwei durch nicht dargestellte Schrauben miteinander verbundene Bauteile 10, 11 angeordnet ist. Der Fugendämpfer 8 besteht aus zwei Platten 6, 7 unterschiedlicher Dicke, die am Rand fluiddicht miteinander verschweißt sind, wobei lediglich die dünnere Platte 6 die einer Membran eigene relativ geringe Beulsteifigkeit aufweist. Das im jeweiligen Anwendungsfall gewünschte Ausmaß der in Fig. 2 übertrieben dargestellten Beulung des Fugendämpfers wird erzielt, indem durch ein Rückschlagventil, wie beispielsweise einen in die Gewindebohrung 16 der Platte 7 eingeschraubten Schmiernippel 15, und die Bohrungen 13, 14 die hierzu erforderliche Fluidmenge eingepreßt wird.

Der Druck, dem das Fluid in dem montierten Fugendämpfer 8 ausgesetzt ist, kann ursächlich auf zwei verschiedene Arten erzeugt werden. Zum einen kann der Fugendämpfer im leeren Zustand in die Fuge der Bauteile 10, 11 eingebracht werden und die Verbindungsschrauben der beiden Bauteile mit zum Beispiel einem Drittel des zulässigen Drehmoments angezogen werden. Sodann wird in den Fugendämpfer Fluid mit einem so hohen Druck eingefüllt, daß die besagten Schrauben gerade der zulässigen Vorspannkraft ausgesetzt werden. Die Dicke des sich so einstellenden Fluidspalts bemißt sich unter anderem nach dem anfangs auf die Schrauben aufgebrachten Drehmoment beziehungsweise den in ihr wirkenden Zugkräften, der Anzahl und Zugsteifigkeit dieser Schrauben, ihrer jeweiligen Lage in der Fugenverbindung, der Fläche des Fluidspalts, dem Fluiddruck im Fugendämpfer sowie der Beulsteifigkeit der Kontaktflächen der den Fugendämpfer stützenden Bauteile. Der Fluidspalt im Fugendämpfer ist deshalb zwangsläufig nicht überall von gleicher Dicke und kann im unmittelbaren Druckbereich der Schrauben auch durchgedrückt sein.

Die andere Möglichkeit der Fluiddruckerzeugung im Fugendämpfer 8, die sich für so kompressible Fluide, wie Gase, weniger anbietet, besteht darin, den noch nicht montierten Fugendämpfer mit dem für die vorgesehene Fluidspaltdicke rechnerisch notwendigen Fluidvolumen zu füllen, wobei der Fülldruck sich nur nach der Beulsteifigkeit des Fugendämpfers bei der auftretenden Beulung bemißt. Erst danach wird der das Fluid beinhaltende gebeulte Fugendämpfer zwischen die Bauteile 10, 11 eingebracht und deren Verbindungsschrauben mit dem maximalen Drehmoment angezogen. Das führt aufgrund einer stets vorhandenen Kompressibilität des Fugendämpferinhalts zu einer Verringerung der Dicke des mit Fluid gefüllten Spalts 12 - nachfolgend auch als Fluidspalt bezeichnet - und bewirkt den für eine optimale Dämpfungswirkung des Fugendämpfers erforderlichen hohen Fluiddruck.

Der Fluidspalt im Fugendämpfer 8, wie auch in anderen Ausführungsformen der Erfindung, ist bevorzugt von einer Dicke, die kleiner ist als etwa 0.5 mm. Der minimale Betrag der Fluidspaltdicke ist gegeben durch die jeweilige Rauhtiefe der vom Fluid benetzten Oberflächen der den Fluidspalt einschließenden Platten 6, 7. Der aus Festigkeitsgründen jeweils zulässige Betrag der größten Fluidspaltdicke im Fugendämpfer bemißt sich nach den auftretenden Maximalspannungen in dessen nicht abgestützten Flächenbereichen und insbesondere in den die Platten verbindenden Schweißnähten.

Für einer großen mechanischen Druckbelastung ausgesetzte Fugendämpfer werden metallische Werkstoffe vorgezogen, da diese einen besonders hohen Elastizitätsmodul aufweisen. Braucht jedoch der maximal zulässige Fluiddruck in einem Fugendämpfer nur relativ niedrig zu sein und werden nur beschränkte Anforderungen an seine Drucksteifigkeit sowie Temperaturbelastbarkeit gestellt, so ist auch die Verwendung anderer, nichtmetallischer Werkstoffe, wie zum Beispiel schweißbarer Thermoplaste, möglich und unter Umständen sogar wirtschaftlicher.

Da das Fluid im Fugendämpfer 8 einem extrem hohen Druck ausgesetzt ist, drückt die gebeulte Platte 6 mit Ausnahme ihres geschweißten Randbereichs auch entsprechend stark auf die Kontaktfläche mit dem Bauteil 10. Führt das Bauteil 10 relativ zum Bauteil 11 Schwingungen aus, so ändert sich auch mit deren Frequenz der Abstand der beiden Bauteile. Entfernt sich während der Periode insbesondere einer Biegeschwingung das Bauteil 10 vom Bauteil 11 an einer beliebigen Berührstelle mit der Platte 6 beispielsweise nur um 0.0001 mm und nähern sich beide Bauteile an einer anderen Stelle einander an, so bewirkt der große Druck des komprimierten Fluids im Fugendämpfer, daß dieses augenblicklich an die Stelle der sich gerade voneinander entfernenden Bauteile strömt. Der Druck des Fluids fällt dabei zu keinem Zeitpunkt unter den Dampfdruck ab, was eine Ausbildung von Dampfblasen zur Folge hätte. Bei der anschließenden Verengung des so zuvor erweiterten Fluidspalts wird das Fluid an seinen Ursprungsort wieder dämpfungswirksam zurückgedrängt. Dieser Fluidverdrängungsvorgang wiederholt sich in jeder Schwingungsperiode bis zum Ende der Schwingungsanregung und dem Abklingen der Schwingung.

Damit eine Dämpfungswirkung des Fugendämpfers 8 auch bei einer durch Schwingungen bedingten gleichmäßigen dynamischen Druckbelastung beziehungsweise einer gleichmäßigen Abstandsänderung der Bauteile 10, 11 zustandekommen kann, weist der Fugendämpfer 8 in seiner Mitte in der dickeren Platte 7 eine Vertiefung 9 auf. Der Volumeninhalt dieser Vertiefung ist um so größer bemessen, je größer der Volumeninhalt des Fluidspalts im Fugendämpfer und je geringer die Fluidkompressibilität ist. Die Vertiefung 9 kann sich sowohl rillenförmig über relativ große Distanzen erstrecken, als auch auf eine bestimmte Stelle konzentriert sein, wenn sie beispielsweise die Form einer Halbkugel oder einer Sacklochbohrung aufweist.

Erfolgt durch schwingungsbedingte Kräfte eine periodische, gleichmäßige Änderung des gegenseitigen Abstands der Bauteile 10, 11 und damit auch des Fugendämpfervolumeninhalts, so wird dadurch eine periodische Druckänderung des im Fugendämpfer eingeschlossenen, mehr oder weniger kompressiblen Fluids bewirkt. Diese Fluiddruckänderung ist in der Vertiefung 9 betragsmäßig kleiner als im Spalt 12, da bei der Vertiefung 9 die relative Betragsänderung der dort wesentlich größeren Fluidspaltdicke erheblich geringer ist als im Spalt 12. Demgemäß wird bei einer schwingungsbedingten Kompression des Fluids dieses von allen Bereichen eines sich in seiner Dicke verringernden Spalts 12 in die Vertiefung 9 gedrängt. Bei der anschließenden Reduzierung des äußeren Drucks auf die Fugendämpferwände beziehungsweise Erweiterung des Spalts 12 entweicht Fluid aus der Vertiefung 9 unter Dekompression in den Spalt 12 wieder zurück. Der geschilderte dämpfungswirksame Fluidverdrängungsvorgang wiederholt sich in jeder Schwingungsperiode bis zum Abklingen der Schwingung.

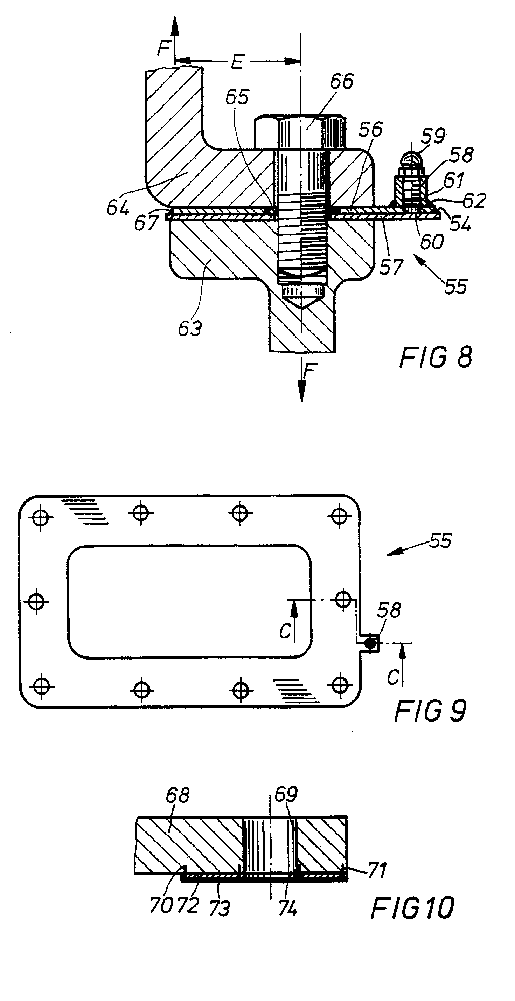

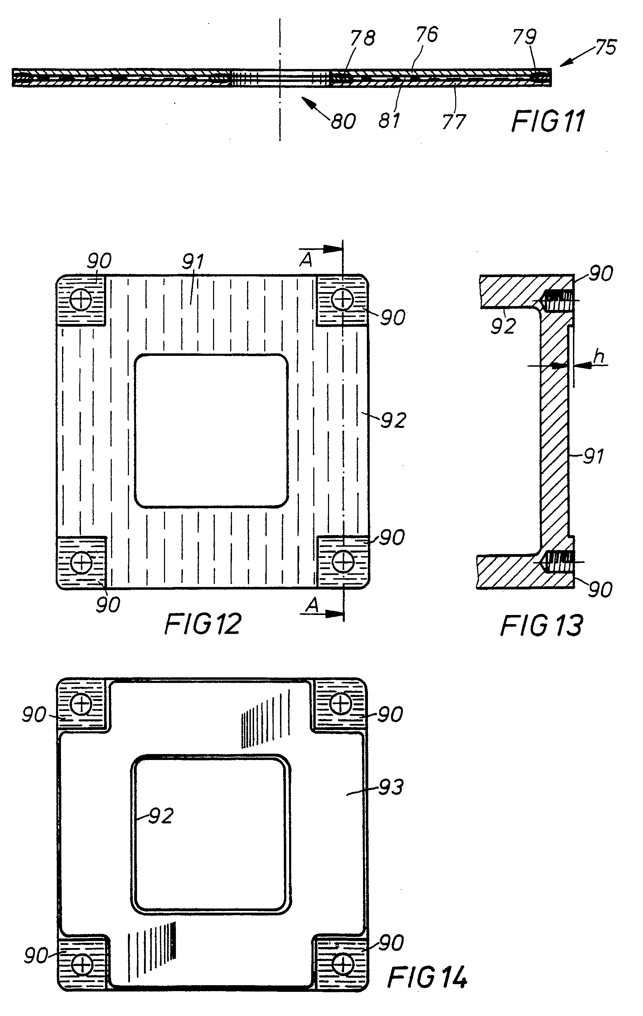

Neben der Bedeutung für die Ausbildung einer dämpfungsfähigen Fluidströmung im Fugendämpfer ist eine gewisse Kompressibilität des Fugendämpferinhalts auch deshalb nützlich, um trotz beispielsweise thermisch bedingter teilweiser Abstandsvergrößerung der Kontaktflächen der den Fugendämpfer stützenden Bauteile und dadurch bedingter Fugendämpfervolumenvergrößerung, ein zu starkes Absinken des Fluiddrucks im Fugendämpfer zu vermeiden. Diese positive Wirkung der Kompressibilität des Fugendämpferinhalts wird noch verstärkt durch die bei fallendem Fluiddruck sich rückbildende elastische Verformung besagter Kontaktflächen im Sinne einer Verringerung des Fugendämpfervolumeninhalts. Je nach Fugendämpferbauart, Fugendämpferinhalt und Abmessungen besagter Kontaktflächen kann letztgenannter Effekt von absolut dominierender Wirkung und insbesondere bei als Flachdichtung fungierenden Fugendämpfern,

5

wie beispielsweise denjenigen der Fig. 8 und 14, sehr nützlich sein.

In Bezug auf seine Dimensionierung weist ein Fugendämpfer dann optimale Voraussetzungen zu einer hohen Drucksteifigkeit auf, wenn das Verhältnis seiner Kontaktfläche mit den ihn stützenden Bauteilen zum Fugendämpfervolumeninhalt möglichst groß ist. Demgemäß sollte die Vertiefung 9 einen möglichst kleinen Volumeninhalt aufweisen, beziehungsweise es sollte ganz auf sie verzichtet werden, wenn sehr hohe Anforderungen an die Drucksteifigkeit eines Fugendämpfers gestellt werden.

Die Dämpfungswirkung des Fugendämpfers 8 von Fig. 2 kann auch erzielt werden, indem sämtliche Funktionen der Platte 7 in das Bauteil 11 integriert werden und auf dieses die Platte 6 dann direkt aufgeschweißt wird. Genauso wäre es auch möglich, die Funktionen der Platte 7 vom Bauteil 10 übernehmen zu lassen und die Platte 6 auf das so veränderte Bauteil 10 aufzuschweißen. Diese Vorgehensweise bietet sich insbesondere in der Großserie oder bei der Forderung nach Leichtbauweise an.

Wie die Schnittdarstellungen der Fig. 3 und 4 beispielhaft zeigen, ist es auch möglich, zur Erzielung einer dämpfungsfähigen reversiblen Fluidströmung bei den eine quadratische Grundfläche aufweisenden Fugendämpfern 30, 36, deren sie stützende Bauteile nicht abgebildet sind, in den vergrößert dargestellten, mit Fluid gefüllten Spalten 33 und 37 Folien 34, 35 vorzugsweise aus Metall anzuordnen. Diese können auf die Platte 32 geschweißt, kalt gewalzt, gelötet oder geklebt sein, wobei jedoch zu berücksichtigen ist, daß die jeweils angewandte Verbindungsart und die Folien durch die Wärmeentwicklung beim Verschweißen der Platten 31, 32 nicht thermisch geschädigt werden.

Der durch die Folien 34, 35 bewirkte Dämpfungseffekt beruht auf der Differenz der Kompressibilität des in den Fugendämpfern 30, 36 eingeschlossenen Fluids und des Folienwerkstoffs. Sind die Folien aus Metall, so weisen sie eine um Größenordnungen geringere Kompressibilität auf als das Fluid. Da die Dicke des Fluidspalts über den Folien um deren Dicke reduziert wird, ist der Fluidspalt über den Folien von entsprechend geringerer Kompressibilität wenn der Fugendämpfer durch dynamische Belastungen periodisch zusammengedrückt wird. Unter diesen Bedingungen werden dann über den Folien befindliche Fluidteilchen in den nicht durch die Folien in seiner Dicke verringerten und somit kompressibleren Fluidspalt verdrängt, um bei dynamischer Entlastung des Fugendämpfers wieder an den ursprünglichen Ort über die Folien zurückgedrängt zu werden. Hierdurch stellt sich in dem Fugendämpfer eine dämpfungswirksame periodische Fluidströmung in der Frequenz der auftretenden Schwingung ein. Der so erzielbare Dämpfungseffekt ist unter anderem abhängig von der Dicke des Fluidspalts über den Folien, der Folienfläche, dem Volumenverhältnis der Folien zum im Fugendämpfer befindlichen Fluid und der Kompressibilitätsdifferenz zwischen den Folien und dem Fluid.

Der beschriebene Dämpfungseffekt tritt auch dann auf, wenn die Folien gegenüber dem verwendeten Fluid keine geringe, sondern weil sie zum Beispiel aus Kunststoff bestehen, eine relativ hohe Kompressibilität aufweisen. In diesem Fall bewirkt eine dynamische Druckbelastung des Fugendämpfers eine Bewegung von Fluidteilchen aus Bereichen des nicht in seiner Dicke reduzierten Fluidspalts in den von der kompressiblen Folie verengten Spaltbereich, also umgekehrt wie bei einer Folie von relativ geringer Kompressibilität.

Obgleich der beschriebene Dämpfungseffekt sowohl bei sehr kompressiblen als auch bei nahezu inkompressiblen Gegenständen, wie zum Beispiel Metallfolien, auftritt, ist doch die Verwendung letzterer vorzuziehen. Dies bebegründet sich mit der höheren statischen Drucksteifigkeit eines derart ausgestatteten Fugendämpfers.

Die Folien 34, 35 können in ihrer Funktion einer bereichsweisen Reduzierung der Fluidspaltdicke auch noch durch andere funktionsgleiche Bauteile ersetzt werden. Hierzu kann beispielsweise die Platte eines Fugendämpfers mit entsprechenden Erhabungen versehen werden, indem die übrige Fläche der Platte beispielsweise durch Fräsen, Schleifen oder Ätzen in ihrer Dicke entsprechend reduziert wird.

In einem Fugendämpfer ist der Fluiddruck dann genügend hoch, wenn bei dynamischen Spaltdickenänderungen in der jeweiligen Frequenz der vorrangig zu dämpfenden Schwingungsform die Entstehung von nicht durch Fluid ausgefüllte Hohlräume beziehungsweise eine Dampfblasenbildung bei der im Spalt befindlichen Flüssigkeit vermieden wird. Desgleichen können bei einem genügend hohen Fluiddruck im Fugendämpfer auch keine spaltförmigen Hohlräume zwischen den Metallplatten und den sie stützenden Bauteilen auftreten. Eine darüber hinaus gehende Druckerhöhung des Fluids hat dann keine weitere Verbesserung der Dämpfung mehr zur Folge. Sie zieht vielmehr den möglichen Nachteil einer dämpfungsmindernden Vergrößerung der Fluidspaltdicke im Fugendämpfer nach sich, beruhend auf einer in diesem Sinne zunehmenden Einbeulung der unter Fluiddruck stehenden Kontaktfläche der die Fugendämpferwände stützenden Bauteile.

Außer dem Fluiddruck beeinflussen noch folgende Parameter die Energiedissipation im Fluidspalt eines Fugendämpfers: Die Frequenz des sich periodisch wiederholenden Vorgangs der Fluidverdrängung, die Rauheit der vom Fluid benetzten Fugendämpferoberflächen beziehungsweise deren Strömungswiderstand, die Dicke des Fluidspalts, die Wegstrecken, die die einzelnen Fluidteilchen bei einem Verdrängungsvorgang zurücklegen, sowie die Viskosität und das Volumen des in der Frequenz der Schwingung reversibel verdrängten Fluids.

Unter der Voraussetzung, daß der Druck des Fluids im Fugendämpfer groß genug ist, in ihm eine periodische Entstehung von nicht durch Fluid ausgefüllter Hohlräume zu verhindern beziehungsweise eine Dampfblasenbildung im Fluid zu vermeiden, wird die als Schwingungsdämpfung im Fluidspalt sich vollziehende Umwandlung von mechanischer Energie in Wärmeenergie gesteigert, wenn der Fluidspalt im Fugendämpfer in seiner Dicke reduziert wird und die Beträge aller anderen genannten Einflußparameter erhöht werden. Ist der optimale Strömungswiderstand im Fugendämpfer bei dem jeweils herrschenden Fluiddruck aber bereits überschritten, so haben diese Maßnahmen jedoch eine Verschlechterung der Dämpfungswirkung eines Fugendämpfers zur Folge. Dies ist zurückzuführen auf ein nur noch unvollständiges Einströmen von Fluidteilchen entgegen zu stark wirksamer Strömungswiderstände in periodisch entstehende Hohlräume im Fugendämpfer.

Von den genannten Strömungswiderständen sind unmittelbar diejenigen Fluidteilchen betroffen, die vom schwingenden Bauteil in dessen Frequenz über eine Fugendämpferwand einem periodischen Druck unterworfen werden, dem sie jedoch mangels genügend schneller Überwindung relativ großer Entfernungen im Fugendämpfer nicht entweichen können.

Aus diesem Grund sind zur Optimierung der Wirkung einer erfindungsgemäßen Dämpfungseinrichtung zusätzliche Mittel oder Merkmale, die eine vom übrigen Fugendämpferinhalt abweichende Kompressibilität aufweisen und periodische, reversible Fluidströme zur Folge haben, vorzugsweise so anzuordnen, daß ihre größte Entfernung zu den periodisch strömenden Fluidteilchen minimal ist.

Weist ein Fugendämpfer eine schmale, langgestreckte Form seines dämpfungswirksamen Fluidspalts auf, wie das insbesondere für ringförmige Fugendämpfer zutrifft, so können mehrere der besagten Mittel beziehungsweise Merkmale in gleichmäßigem Abstand über den Ringumfang plaziert werden. Eine andere, diesbezügliche Möglichkeit besteht darin, eine Ringnut in einem ringförmigen Fugendämpfer als ein der Vertiefung 9 funktionsgleiches, dämpfungswirksames Mittel anzuordnen.

Insbesondere bei ringförmigen Fugendämpfern ist die Anwendung besagter Mittel beziehungsweise Merkmale vorteilhaft, da sie dünnere Fluidspalte bei gleicher Dämpfungswirkung wie dickere Fluidspalte ohne jene Merkmale ermöglichen. Diese dünneren Fluidspalte haben eine größere statische Radialsteifigkeit des Fugendämpfers zur Folge. Weiterhin tritt bei dünneren Fluidspalten eine geringere, temperaturbedingte Volumenänderung des eingeschlossenen Fluids auf.

Die Optimierung der Dämpfungswirkung eines Fugendämpfers ist grundsätzlich nur für eine bestimmte Schwingungsform und deren Frequenz möglich. Es ist deshalb empfehlenswert, die Dämpfungswirkung eines Fugendämpfers stets für die niedrigste und meistens auch störendste Schwingungsform, die beim Einsatz flacher Fugendämpfer in der Regel eine Biegeschwingungsform ist, zu optimieren. Für höhere Schwingungsformen besitzt der Fugendämpfer meistens dann immer noch eine ausreichende Dämpfungswirkung.

Fig. 5 zeigt im Schnitt einen von den Platten 40, 41 gebildeten quadratischen Fugendämpfer 42, der durch die miteinander verschraubten Bauteile 43, 44 abgestützt wird, deren Verbindungsschrauben nicht dargestellt sind. Das Bauteil 43 weist in Fugendämpfermitte, bedingt durch eine nur gering bemessene Wandstärke, eine herabgesetzte Beulsteifigkeit auf. Bei schwingungsbedingten, periodischen Abstandsänderungen der Bauteile 43, 44 treten in dem von dem Fugendämpfer eingeschlossenen Fluid periodische Druckschwankungen auf. Diese haben eine periodische Ausbeulung der Platte 40 und des Bauteils 43 zur Folge, die sich der übertrieben dargestellten konstanten Fugendämpferbeulung überlagert. Hierdurch stellt sich im Fugendämpfer eine die Dämpfung bewirkende reversible periodische Fluidströmung in der Frequenz der Schwingung ein. Voraussetzung hierfür ist jedoch, daß der nachgiebige Bereich des Bauteils 43 durch die periodischen Fluiddruckänderungen im Fugendämpfer nur elastisch aber nicht plastisch verformt wird.

Eine dämpfungsfähige, reversible Fluidströmung läßt sich auch dann erzielen, wenn beispielsweise wie in Fig. 6, die Platte 40 des Fugendämpfers 42 bevorzugt in ihrer Mitte von dem zu dämpfenden Bauteil auf einer gewissen Teilfläche nicht abgestützt wird. Die optimale Größe dieser nicht abgestützten Teilfläche der Platte 40 bemißt sich dabei unter anderem nach der Form ihrer Ausdehnung, der Plattendicke und dem Fluiddruck im Fugendämpfer. Bei einer durch Schwingungen hervorgerufenen periodischen Änderung des Fluiddrucks stellt sich dann eine entsprechend periodische Ausbeulung der nicht abgestützten Teilfläche der Platte 40 in der Schwingungsfrequenz ein, jedoch nur unter der Voraussetzung, daß die Platte 40 durch die periodischen Änderungen des Fluiddrucks keine plastischen sondern nur elastische Formänderungen erfährt.

Um mit Sicherheit eine zu starke, nicht mehr elastische Beulung der Platte 40 ausschließen zu können, wird diese durch einen von den Folienstreifen 46, 47 und dem Bauteil 45 gebildeten, vergrößert dargestellten dünnen Spalt 48 so begrenzt, daß die auftretende Formänderung der Platte 40 stets im elastischen Bereich bleibt. Die Folienstreifen 46, 47 können dabei auf die Platte 40 geschweißt, geklebt oder auch nur aufgelegt sein.

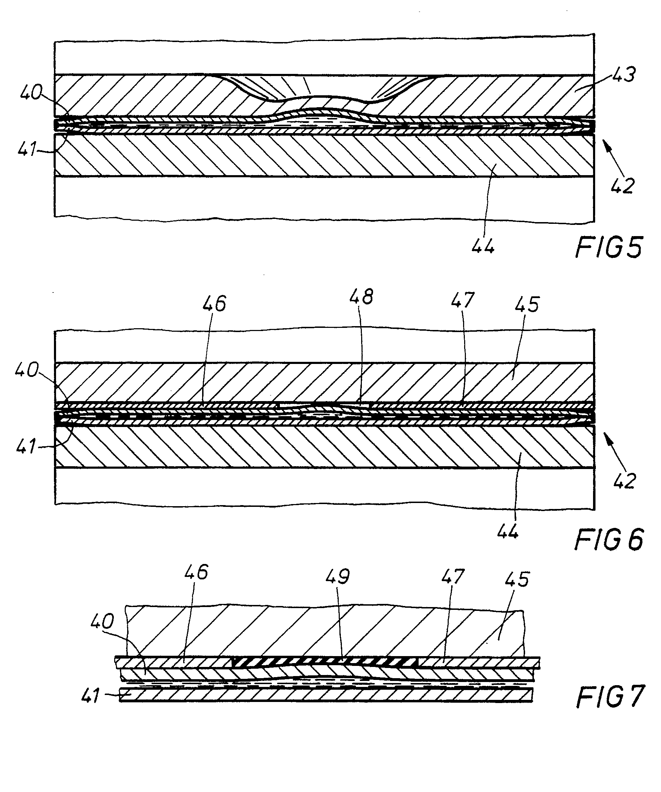

Um eine zu starke Beulung der Platte 40 zu vermeiden und deren Rückverformung bei Nachlassen des Fluiddrucks zu begünstigen, ist es entsprechend der vergrößerten Schnittdarstellung in Fig. 7 auch möglich, den Spalt 48 der Fig. 6 teilweise oder ganz mit einer elastischen Kunststoffmasse 49 auszufüllen, die bei einer Beulung der Platte 40 entsprechend komprimiert wird.

Zur Fluidbefüllung des Fugendämpfers 42 bietet sich folgende Vorgehensweise an. Der Fugendämpfer wird durch äußere Kräfte einer elastischen Beulung im Sinne einer Vergrößerung seines Volumeninhalts unterworfen, indem senkrecht zur Fluidspaltebene weggerichtete Kräfte über Magnete oder Saugnäpfe an den Platten 40, 41 angreifen. In den so elastisch verformten Fugendämpfer wird dann durch eine Öffnung eine genau bemessene Flüssigkeitsmenge eingefüllt. Diese Öffnung kann beispielsweise gebildet werden durch eine auf einer Länge von 40 mm vorübergehend nicht ausgeführte Schweißnaht, die erst nach der Flüssigkeitsbefüllung geschlossen wird. Hierbei wird bewußt in Kauf genommen, daß neben der Flüssigkeit noch eine gewisse Luftmenge im Fugendämpfer verbleiben kann.

Fig. 8 zeigt in einer Schraubenverbindung angeordnet, den Schnitt C-C durch den in Fig. 9 im kleineren Maßstab in der Draufsicht dargestellten Fugendämpfer 55. Er ist eine besonders bevorzugte erfindungsgemäße Ausführungsform zur dämpfungswirksamen Nutzung schwingungsbedingter Relativbewegungen flacher Fugenverbindungen. In Fig. 8 ist der noch nicht mit Fluid befüllte Fugendämpfer zwischen den miteinander verschraubten Bauteilen 63, 64 angeordnet. Er wird gebildet aus zum Beispiel je 1.5 mm dicken Platten 56, 57, die aus Stahl bestehen und durch Schweißnähte 67, 54 an ihrer Außenberandung druckdicht miteinander verbunden sind. Für die Schraube 66 weist der Fugendämpfer eine Durchtrittsöffnung auf, die durch die Schweißnaht 65 abgedichtet ist.

Die Verbindung der Platten 56, 57 könnte auch durch andere Schweißverfahren erfolgen, wie beispielsweise Elektronen- oder Laserstrahlschweißen. Die für die Schrauben 66 notwendigen Durchtrittsöffnungen können mit letzteren Verfahren hergestellt werden, wenn an den hierfür vorgesehenen Stellen die Platten kreis- oder ringförmig verschweißt werden und dann erst die Durchtrittsöffnungen mechanisch oder thermisch gefertigt werden.

Wie Fig. 8 zeigt, ist auf den als schmalen kurzen Streifen ausgeführten, nicht abgestützten rechten Teil der Platte 56 ein kurzer Zylinder 58 mit einer umlaufenden Kehlnaht 62 druckdicht aufgeschweißt. Hierzu wäre auch das Bolzenschweißen geeignet. Der Zylinder weist eine Gewindebohrung 61 für einen als Rückschlagventil fungierenden Schmiernippel 59 auf.

Die Fluidbefüllung des eingebauten Fugendämpfers erfolgt über den Schmiernippel 59, die Gewindebohrung 61 und die Bohrung 60 in der Platte 56. Der nicht abgestützte schmale Streifen stellt dabei wie eine Rohrleitung eine Verbindung zur abgestützten Fugendämpferfläche her. Er kann gegen zu starkes Ausbeulen zusätzlich durch gleichmäßig verteilte Schweißpunkte gezielt versteift werden.

Die Fluidbefüllung des Fugendämpfers kann erleichtert werden, wenn in der Fugenmitte besagten Streifens in zumindest einer der Platten 56, 57 eine rillenförmige Ausnehmung von beispielsweise 1 mm Breite und 0.2 mm Tiefe angeordnet wird. Diese kann sich zur schnelleren Fluidbefüllung in der abgestützten Membranfläche noch fortsetzen und damit auch Funktionen der Vertiefung 9 von Fig. 2 ausüben.

Der zwischen den Platten 56, 57 eingeschlossene, in Fig. 8 nicht dargestellte Fluidspalt weist eine durchschnittliche Dicke von beispielsweise 0.05 mm auf. Der Fluidspalt kann durch eine bei der Fugendämpferbefüllung gezielt begrenzte Fluidmenge im unmittelbaren Schraubendruckbereich auch durchgedrückt sein und wird dann wegen der unvermeidlichen Verwölbung der Bauteile 63, 64 seine größte Dicke zwischen zwei Schrauben 66 aufweisen. Ein derartiger Fluidspalt bewirkt vorteilhaft, daß die Genauigkeit der Relativlage der Bauteile 63, 64 nur von der Dickenkonstanz der Platten 56, 57 abhängig ist.

Die bei den unter der dynamischen Kraft F stehenden Bauteilen 63, 64 erzielbare Dämpfung ist konstruktiv durch die Breite der Kontaktflächen der Fugenverbindung und der Abmessung E festgelegt.

Die Wirkung von Flachdichtungen wird durch in den Fugenverbindungen angeordnete erfindungsgemäße Fugendämpfer, beispielsweise vergleichbar demjenigen von Fig. 8, verbessert. Der Fluiddruck in einem solchen Fugendämpfer hat unter der Voraussetzung, daß der Fluidspalt an keiner Stelle durchgedrückt ist, aufgrund der relativ geringen Beulsteifigkeit der Fugendämpferwände eine überall konstante Druckbelastung der Fugenflächen sie abstützender Bauteile beziehungsweise der Flachdichtung zur Folge. Deren so erzielbare Dichtwirkung bleibt auch dann erhalten, wenn die Fugenflächen durch Einwirkung äußerer Kräfte oder Wärmequellen sich verformen, nicht mehr exakt plan und zueinander parallel sind.

Besonders hohe Anforderungen an einen erfindungsgemäßen Fugendämpfer in Bezug auf seine Abdichtwirkung bestehen, wenn er zur Verbesserung der Körperschalldämpfung zwischen Zylinderkopf und Gehäuse eines Dieselmotors angeordnet wird. Durch die hohen dynamischen Verbrennungsdrücke in den Zylindern kann es vorteilhaft sein, einen derart plazierten Fugendämpfer mit einem besonders kompressiblen Fluid zu füllen, um ein kurzzeitiges Abheben des Zylinderkopfs vom Zylinderblock insbesondere in den von den Zylinderkopfschrauben entferntest liegenden Bereichen zu vermeiden.

Soll ein erfindungsgemäßer Fugendämpfer die Funktion einer herkömmlichen Zylinderkopfdichtung oder einer anderen Flachdichtung mitübernehmen, kann seine Fähigkeit zur Mikroabdichtung durch eine entsprechende Beschichtung der Wanddichtflächen des Fugendämpfers verbessert werden. So kann gemäß der Deutschen Offenlegungsschrift 2818472 die Fugendämpferoberfläche mit einer Kunststoffdichtungsschicht überzogen werden, die beispielsweise aus einem Silikon-, Polyurethan- oder Fluorpolymer besteht.

Analog zu Fig. 8 zeigt Fig. 10 im Schnitt eine weitere besonders bevorzugte Ausführungsform des Erfindungsgedankens, die eine Flachdichtung ersetzt. Sie bietet sich in dieser Art vor allem bei in größeren Serien hergestellten Produkten an. Der beispielsweise zu einem Getriebegehäuse gehörige Deckel 68 ist mit einer Platte 72 durch die Schweißnähte 70, 71, 74 verbunden. Diese entstanden durch einen senkrecht auf die Platte 72 gerichteten Laserstrahl. Die Bohrung 69 dient zur Durchführung einer der nicht dargestellten Befestigungsschrauben des Deckels 68. Die Platte 72 ist zur Mikroabdichtung mit einer Polymerbeschichtung 73 von beispielsweise 0.1 mm Dicke versehen. Der zwischen dem Deckel 68 und der Platte 72 gebildete Spalt wird über eine in diesen mündende, nicht dargestellte Gewindebohrung und ein in letztere eingeschraubtes Rückschlagventil mit Fluid befüllt.

Fig. 11 zeigt den Schnitt eines Fugendämpfers 75 mit kreisförmiger Grundfläche und einer zentrisch angeordneten, ebenso kreisförmigen Schraubendurchgangsöffnung 80, bestehend aus zwei Platten 76, 77 sowie im inneren und äußeren Randbereich des Fugendämpfers angeordneter, kreisförmiger Folienringe 78, 79. Diese sind mit den Platten 76, 77 durch das Verfahren des Rollennahtschweißens fluiddicht verbunden. Die Folienringe fungieren als Abstandhalter der Platten 76, 77, die deshalb auch bereits bei einem noch nicht mit Fluid gefüllten Fugendämpfer zueinander einen übertrieben groß dargestellten Spalt 81 von beispielsweise 0.05 mm Dicke bilden.

Gegenüber den Fugendämpfern der Fig. 2-10 liegt der spezielle Vorteil desjenigen von Fig. 11 darin, daß aufgrund der zur Fluidspaltbildung nicht notwendigen Beulung der Platten 76, 77, diese auch in ihrem äußeren und inneren Randbereich durch an den Fugendämpfer angrenzende Bauteile abgestützt werden. Voraussetzung hierfür ist jedoch, daß der Fugendämpfer mit keiner zu großen Fluidmenge befüllt wird.

Die Bauweise des Fugendämpfers 75 ist in besonderem Maße geeignet für eine Fluideinfüllöffnung ähnlich wie in Fig. 8, die mit der abgestützten Fugendämpferfläche durch einen von den Platten 76, 77 gebildeten schmalen Streifen verbunden ist, der eine Fluidverbindungsleitung darstellt. Hierzu muß der Folienring 79 in seiner ursprünglichen Kreisform derart geändert werden, daß er sowohl die abgestützte Kreisfläche als auch die nicht abgestützte Streifenfläche einschließt, und so der kreisförmige Fluidspalt um die Streifenfläche erweitert wird.

Eine durch die Druckkraft der in der Schraubendurchgangsöffnung 80 befindlichen Schraube bedingte Verformung der Fugenkontaktflächen der genannten Bauteile im Sinne einer Reduzierung der Fluidspaltdikke wird durch den um die Schraube angeordneten Folienring 78 weitgehend vermieden.

Ein Fugendämpfer von der Bauart nach Fig. 11 kann nur solche Schwingungen dämpfen, die bei den ihn stützenden Bauteilen in den so gebildeten Fugenkontaktflächen dynamische Verwölbungen derart zur Folge haben, daß der Fluidspalt im Fugendämpfer einer nicht überall gleichen dynamischen Dickenänderung ausgesetzt ist. Diese Bedingungen werden insbesondere von Biegeschwingungen der Bauteile erfüllt.

Insbesondere im Werkzeugmaschinenbau soll die Lagegenauigkeit zweier miteinander verschraubter Bauteile sehr hoch sein. Deshalb sind deren Fugenkontaktflächen zumindest geschliffen. Sie sind zur Erzielung einer ausreichenden Fugendämpfung in der Regel relativ großflächig bemessen. Hierdurch wird jedoch erheblich gegen das Prinzip der statisch bestimmten Verbindung zweier Bauteile verstoßen, die exakt nur durch drei Punkte erfolgen kann. Auch aus diesem Grund ist eine sehr genaue Bearbeitung der Fugenkontaktflächen erforderlich.

Soll in der geschraubten Fugenverbindung genannter Bauteile ein Fugendämpfer Anwendung finden, so empfiehlt sich eine hierauf besonders abgestimmte Gestaltung der Fugenkontaktflächen. Hierzu werden gemäß Fig. 12, die eine Draufsicht auf die Kontaktfläche der Schraubenverbindung eines Bauteils 92 darstellt, nur die unmittelbaren Schraubendruckbereiche 90 beispielsweise durch Schleifen feinbearbeitet. Wie Fig. 13 im Schnitt A-A der Fig. 12 zeigt, werden diese Schraubendruckbereiche um den Betrag h erhaben ausgeführt, so daß die tiefer liegende Fugenfläche 91 lediglich gefräst zu sein braucht. Wird sowohl die Kontaktfläche des Bauteils 92 als auch die des nicht dargestellten, mit ihm verschraubten anderen Bauteils identisch ausgeführt, so weist der von der Fugenfläche 91 gestützte, in Fig. 14 in der Draufsicht dargestellte Fugendämpfer 93 eine Dicke vom ungefähren Betrag 2·h auf. Die exakte Dicke des Fugendämpfers 93 richtet sich nach der angestrebten Fluidspaltdicke beziehungsweise der Verwölbung der

9

Fugenfläche 91 und der ihr gegenüberliegenden.

Die Art der geschilderten Fugendämpferanwendung ermöglicht eventuell sogar eine Kostenersparnis, da lediglich die unmittelbaren Schraubendruckbereiche 90 exakt bearbeitet werden müssen. Dabei kann durch die größere statische Bestimmtheit der Fugenverbindung die erforderliche Bearbeitungsgenauigkeit sogar niedriger sein.

Weiterhin ist die Lagegenauigkeit der den Fugendämpfer stützenden Bauteile nicht, wie zum Beispiel bei der Anordnung von Fig. 8, abhängig von der Dicke und der Drucksteifigkeit des Fugendämpfers. Dieser kann deshalb auch aus schweißbaren Thermoplasten bestehen. Die die Schraubendruckbereiche 90 zusammendrückenden Schrauben müssen lediglich groß genug dimensioniert sein, damit die aus dem Fluiddruck des Fugendämpfers und ihrer Fläche resultierende Kraft die Schraubendruckbereiche nicht zu sehr entlastet.

Der Fluiddruck im Fugendämpfer 93 wird erzeugt, indem dieser vor seiner Montage bereits mit einer genau bemessenen Fluidmenge befüllt wird. Bei der Montage des Fugendämpfers beziehungsweise der Fugenverbindung stellt sich dann eine elastische Beulung der den Fugendämpfer stützenden Fugenfläche 91 und der nicht dargestellten, ihr gegenüber liegenden ein. Eine einfachere Art der Fluidbefüllung ergibt sich bei der Verwendung eines mit einem Rückschlagventil versehenen Fugendämpfers, wie ihn Fig. 8 zeigt. Ein solcher Fugendämpfer wird erst nach seiner Montage mit Flüssigkeit entsprechenden Drucks gefüllt.

Es ist bekannt, daß Durchbrüche beziehungsweise Öffnungen beispielsweise in Werkzeugmaschinengestellen oder Getriebegehäusen, insbesondere deren Torsionssteifigkeit erheblich herabsetzen können. Auch wenn, wie bei einem Getriebegehäuse, eine derartige Öffnung mit einem durch Schrauben verschließbaren Deckel versehen ist, ändert dies sowohl an ihrem, die dynamische Steifigkeit als auch die Frequenz reduzierenden Einfluß nur wenig. Auftretende Gehäuseschwingungen haben nämlich trotzdem kleinste dynamische Relativbewegungen zwischen Gehäuse und Deckel zur Folge.

Derartige Relativbewegungen lassen sich dämpfungswirksam nutzen, wenn zwischen Deckel und Gehäuse ein Fugendämpfer plaziert wird. Damit die Relativbewegungen möglichst große dynamische Fluidspaltdickenänderungen bebewirken können, soll der Fugendämpfer beziehungsweise sein dämpfungswirksamer Fugenspalt zu der die besagte Öffnung aufweisenden Gehäusewand normal angeordnet sein.

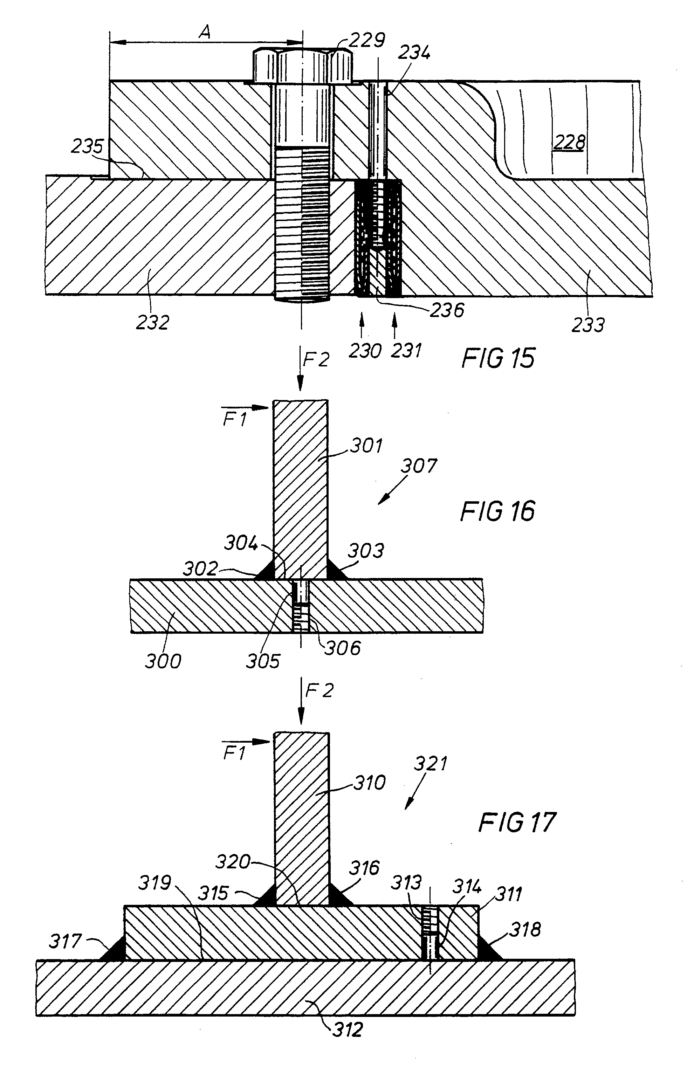

Diese Bedingung erfüllt der in Fig. 15 im Schnitt dargestellte ringförmige Fugendämpfer eines Getriebegehäuses 232. Er besteht aus einer dämpfungswirksamen Membran 230 und einer lediglich toleranzüberbrückenden Membran 231, die beide mit dem Ring 236 durch Widerstandsschweißnähte verbunden sind. Die Membran 230 wird bereits vor der Montage des Deckels 233 über ein nicht dargestelltes Rückschlagventil mit Fluid gefüllt, so daß sich ein in Fig. 15 übertrieben dick dargestellter Spalt von beispielsweise 0.05 mm Dicke ergibt. Erst nach dem leichten Anziehen der den Deckel 233 befestigenden Schrauben 229 wird in die Membran 231 über ein entsperrbares, durch die Bohrung 234 zugängliches, nicht dargestelltes Rückschlagventil ein möglichst inkompressibles, hochviskoses Fluid eingepreßt, bis der Deckel 233 fest im Getriebegehäuse 232 eingeklemmt ist. Anschließend werden die Schrauben 229 mit dem zulässigen Drehmoment nachgezogen.

Da die Beulfähigkeit der Membran 231 beschränkt ist, muß das zu überbrückende Spiel in der zylindrischen Fuge zwischen dem Deckel 233 und dem Getriebegehäuse 232 dementsprechend eng toleriert sein.

Bei Benutzung des Keileffekts zur Fluiddruckerzeugung kann auf die toleranzüberbrückende Membran 231 unter Umständen auch verzichtet werden.

Würde zusätzlich ein mit Fig. 8 vergleichbarer Fugendämpfer in der Auflagefläche 235 des Deckels 233 plaziert werden, so würden Schwingungsformen, die eine dynamische Änderung des Fugenspalts in der Auflagefläche 235 bewirken, um so besser gedämpft werden, je größer die Abmessung D des Deckels 233 ist.

Bei im Einsatz extrem hohen Temperaturen ausgesetzten Fugendämpfern bietet es sich auch an, diese bei der unter Raumtemperatur ablaufenden Fertigung nicht mit einem Fluid sondern mit einem festen Stoff, wie beispielsweise Natrium, zu füllen. Bei Betriebstemperatur des Fugendämpfers wird das Natrium dann zu einer Flüssigkeit.

Der den Squeeze-Film-Effekt ausnutzende Erfindungsgedanke läßt sich auch bei Schweißverbindungen von Schweißkonstruktionen anwenden. So stellt Fig. 16 den Schnitt durch eine dämpfungswirksame Schweißverbindung 307 dar, die ein Stegblech 301 durch die Kehlnähte 302, 303 mit dem Wandblech 300 verbindet, wobei die beiden Bleche den Spalt 304 einschließen. Der Spalt 304 wird auch an den beiden Schmalseiten des Stegblechs 301 durch nicht dargestellte, zur Zeichenebene parallele Kehlnähte abgeschlossen. Unter der Bedingung, daß alle Kehlnähte durchgehend ausgeführt und druckdicht sind, kann über ein nicht dargestelltes, in die Gewindebohrung 306 eingeschraubtes Rückschlagventil und die Bohrung

EP 0 244 406 B1

305 Fluid, wie zum Beispiel Schmierfett, in den Spalt 304 eingepreßt werden.

Es empfiehlt sich, die Bohrung 305 in wesentlich größerem Durchmesser auszuführen als für die Fluidzufuhr selbst nötig ist. Nach erfolgter Fluidbefüllung bewirkt dann eine kurzzeitige, geringe Leckage des Rückschlagventils, in dem Augenblick wenn der Druckanschluß von diesem gelöst wird, nur eine unwesentliche Druckminderung im Fluidspalt, da die Kompressibilität des Fluids in der Bohrung 305 eine druckspeichernde Wirkung hat. Darüberhinaus können weitere in den Spalt 304 mündende Sacklochbohrungen im Stegblech 301 oder im Wandblech 300, plaziert im gegenseitigen Abstand von beispielsweise der fünffachen Dicke des Stegblechs 301, angeordnet sein. In die Bohrungen können vorteilhaft zusätzlich noch kleine Gegenstände aus Kunststoff eingebracht werden, die eine wesentlich höhere Kompressibilität als das verwendete Fluid aufweisen, und die dann beispielsweise bei Temperaturänderungen die Funktion einer besseren Druckkonstanthaltung des Fluids erfüllen.

Wirken auf das Stegblech 301 schwingungsbedingte, dynamische Kräfte F1 parallel zum Wandblech 300 und zur Zeichenebene ein, so haben die daraus in der Ebene des Spalts 304 resultierenden dynamischen Biegemomente eine periodische Verformung der den Spalt 304 einschließenden Kehlnähte zur Folge. Bei einer Kraft F1 in der eingezeichneten Richtung erweitert sich die an die Kehlnaht 302 angrenzende Spalthälfte und verengt sich die von der Kehlnaht 303 begrenzte Spalthälfte. Weist die Kraft F1 nach einer halben Schwingungsperiode in die umgekehrte Richtung, so ändert sich im entsprechenden Sinn auch die Dicke der beiden Spalthälften. Es stellt sich somit eine periodische, reversible Fluidverdrängung von einer zur anderen Spalthälfte in der Frequenz der auftretenden Schwingung ein, wodurch diese gedämpft wird. Da das Fluid im Spalt einem hohen Druck ausgesetzt ist, der weit über 100 bar betragen kann, ist jede Vergrößerung der Dicke an irgendeiner Stelle des Spalts 304 von einem unmittelbaren Eindringen von Fluid begleitet, ohne daß eine dämpfungsmindernde Dampfblasenbildung auftritt. Die so erreichbare, auf dem Squeeze-Film-Effekt basierende Dämpfungswirkung ist um so ausgeprägter, je kleiner die Querschnitte beziehungsweise die Dicke aller den Spalt 304 begrenzenden Kehlnähte relativ zur Dicke des Stegblechs 301 und des Wandblechs 300 sind. Dabei wird der kleinste, zulässige Querschnitt dieser Kehlnähte bereits durch die vom Fluiddruck und der Dicke des Stegblechs 301 abhängigen Kräfte senkrecht zum Wandblech 300 begrenzt.

Um bei der Schweißverbindung von Fig. 16 die Anzahl der dämpfungswirksamen Spalte zu erhöhen, können vor der Ausführung der Kehlnähte 302, 303 zwischen die beiden zu verbindenden Bleche auch ein oder mehrere Stahlfolienstreifen eingelegt werden.

Wirken auf das Stahlblech 301 schwingungsbedingte dynamische Kräfte F2 senkrecht zum Wandblech 300 ein, so kann ebenfalls ein gewisser Dämpfungseffekt auftreten, auch wenn die Kräfte F2 das Stegblech 301 als biegemomentfreie Druck- oder Zugkräfte belasten. Der Dämpfungseffekt beruht auf einer periodischen, gleichartigen Verformung der den Spalt 304 abschließenden Kehlnähte und einer sich so ergebenden Verdrängung von Fluid aus dem Spalt 304 in die Bohrung 305, das in der anschließenden halben Schwingungsperiode wieder in den Spalt 304 zurückströmt. Aufgrund dieses Strömungsvorgangs sind zur stärkeren Ausbildung des Dämpfungseffekts vorhergehend erwähnte, zur besseren Konstanthaltung des Fluiddrucks dienende, zusätzliche Sacklochbohrungen besonders geeignet.

Ist der Spalt 304 zum Beispiel durch ungenaue Kantenbearbeitung des Stegblechs 301 ungleichmäßig dick, so bietet es sich an, nach Ausführung aller den Spalt 304 druckdicht abschließenden Kehlnähte, den Spalt 304 vor der eigentlichen Fluidbefüllung mit einer aushärtenden flüssigen Kunststoffmasse auszufüllen. Hierzu kann beispielsweise ein in der Deutschen Auslegeschrift 1049162 für ähnliche Zwecke empfohlenes sogenanntes Devcon verwendet werden. Dabei empfiehlt es sich, zwei Rückschlagventile mit den zugehörigen, in den Spalt 304 mündenden Bohrungen möglichst weit voneinander entfernt im Wandblech 300 oder im Stegblech 301 anzuordnen, wobei das zweite, entsperrbare Rückschlagventil zur Entlüftung und Kontrolle des Befüllungsvorgangs dient. Von dieser Maßnahme kann natürlich auch bei allen anderen, von Schweißnähten eingeschlossenen, nicht ausreichend spaltförmigen Hohlräumen Gebrauch gemacht werden.

Die zuvor beschriebene Maßnahme der Dämpfungserhöhung ist bei allen Arten von Schweißverbindungen möglich, die einen vorzugsweise spaltförmigen Hohlraum druckdicht einschließen.

Fig. 17 zeigt als weiteres Beispiel des Erfindungsgedankens den Schnitt durch die Verbindung eines Wandblechs 312 mit einem Stegblech 310, die als eine dämpfungswirksame Schweißverbindung 321 ausgebildet ist. Diese besteht aus einem Blechstreifen 311, der durch die Kehlnähte 317, 318 und zwei zur Zeichenebene parallele, nicht dargestellte Kehlnähte, die alle durchgehend ausgeführt sind, mit dem Wandblech 312 verbunden ist. Der so zwischen dem Blechstreifen 311 und dem Wandblech 312 gebildete Spalt 319 ist druckdicht abgeschlossen und wird, wie bei der Anordnung von Fig. 16, über ein nicht dargestelltes, in die Gewindebohrung 313 eingeschraubtes Rückschlagventil und die Bohrung 314 mit Fluid befüllt.

Der maximale Fluiddruck im Spalt 319 wird begrenzt durch die Beulsteifigkeit des Blechstreifens 311

11

und des Wandblechs 312 beziehungsweise durch die entsprechend der geforderten Dämpfungswirksamkeit größte zulässige Fluidspaltdicke.

Wird das Stegblech 310 einer zum Wandblech 312 und zur Zeichenebene parallelen, schwingungsbedingten Kraft F1 ausgesetzt, so ergibt sich eine Verwölbung des Blechstreifens 311 im Sinne einer Verkleinerung der Dicke der rechten Spalthälfte und einer Zunahme der Dicke der linken Spalthälfte, begleitet von einer Fluidverdrängung im Spalt von rechts nach links. Bei Richtungsumkehr der Kraft F1 nach einer halben Schwingungsperiode verwölbt sich der Blechstreifen 311 auf entgegengesetzte Weise, wodurch Fluid von der linken zur rechten Spalthälfte dämpfungswirksam verdrängt wird. Dieser Squeeze-Film-Effekt ist dann am ausgeprägtesten, wenn das Stegblech 310 mittensymmetrisch zum Blechstreifen 311 plaziert ist, da dann zu beiden Seiten des Stegblechs 310 Spaltvolumenänderungen gleichen Betrags auftreten.

Weisen die Kehlnähte 315, 316 senkrecht zur Zeichenebene dieselbe Länge wie der Blechstreifen 311 auf, so bewirken die beiden zur Zeichenebene parallelen, nicht dargestellten, den Spalt 319 abschließenden Kehlnähte eine Versteifung des dynamisch auf Verwölbung beanspruchten Blechstreifens 311 und somit eine Einschränkung der dämpfungswirksamen Fluidverdrängung. Dieser Versteifungseinfluß kann vermindert werden, wenn die Kehlnähte 315, 316 nur bis etwa dem fünffachen Betrag der Dicke des Blechstreifens 311 an dessen zur Zeichenebene parallelen, beiden Rändern ausgeführt werden.

Die dämpfende Wirkung der Schweißverbindung 321 beruht also im wesentlichen darauf, daß der Blechstreifen 311 die Verbindung des Stegblechs 310 mit dem Wandblech 312 in ihrer Steifigkeit vermindert, und dynamisch auftretende ungleichmäßige Änderungen der Dicke des mit Fluid gefüllten Spalts 319 durch den Squeeze-Film-Effekt zur Dämpfung ausgenutzt werden. Für die so erzielbare Dämpfung ist deshalb ein ausgewogenes Verhältnis der Dicke des Blechstreifens 311 beziehungsweise der auch von seiner Abmessung senkrecht zum Stegblech 310 abhängigen Biegesteifigkeit zur Dicke des Wandblechs 312 und des Stegblechs 310 erforderlich. Ist beispielsweise das Stegblech 310 von wesentlich geringerer Biegesteifigkeit als der Blechstreifen 311, so kann die aufgrund von Biegeschwingungen des Stegblechs 310 dynamisch auftretende Kraft F1 keine dämpfungswirksamen Verwölbungen des Blechstreifens 311 zur Folge haben, da das Stegblech 310 durch die Kehlnähte 315, 316 wie starr am Blechstreifen 311 eingespannt ist. Ebenso stellt sich keine, die Dämpfung verursachende dynamische Spaltdickenänderung beziehungsweise Fluidverdrängung ein, wenn das Wandblech 312 von wesentlich geringerer Dicke als der Blechstreifen 311 ist. Die den Spalt 319 abschließenden Schweißnähte zwingen dann nämlich dem zu wenig biegesteifen Wandblech 312 die dynamischen Verformungen des Blechstreifens 311 auf.

Greift am Stegblech 310 eine zum Wandblech 312 senkrecht gerichtete schwingungsbedingte dynamische Kraft F2 an, so wird der mit Fluid gefüllte Spalt 319 symmetrisch zur Mittelebene des Stegblechs 310 auf einer Breite, die etwa dem Abstand der Kehlnähte 315, 316 entspricht, verengt. Gleichzeitig wird Fluid in die übrigen beiden Flächenbereiche zwischen den Kehlnähten 317, 315 und 316, 318 verdrängt, so daß sich der Spalt 319 dort dementsprechend erweitert. Wechselt die Kraft F2 nach einer halben Schwingungsperiode ihre Richtung, so stellt sich eine Fluidverdrängung im entgegengesetzten Sinn ein und ändert sich damit auch die Verteilung der Fluidspaltdicke. Inwieweit sich dieser Effekt bei einer dynamischen Kraft F2 dämpfungswirksam ausbilden kann, ist jedoch wesentlich von der Steifigkeit des Wandblechs 312 bezüglich einer derartigen dynamischen Belastung abhängig.

Der Squeeze-Film-Effekt in einer Schweißverbindung kann noch intensiviert werden, wenn zusätzlich die dämpfungswirksamen Merkmale der Fugendämpfer insbesondere der Fig. 2, 4 und 11 einzeln oder kombiniert Anwendung finden. Vor allem das Plazieren von Folienstreifen aus Metall zwischen zwei miteinander zu verschweißende Bauteile entsprechend Fig. 11 - im Fall der Fig. 17 vorzugsweise parallel und angrenzend an die Kehlnähte 317, 318 - ist eine sehr preisgünstige Methode einen dämpfungswirksamen Spalt bestimmter Dicke und Flächenabmessungen zu erzeugen. Hierbei haben die den Fluidspalt begrenzenden Schweißnähte die Funktion eines für Drehwinkel von gewöhnlich weniger als 1 Grad drehsteifen, druckdichten Gelenks.

Wird das Stegblech 310 einer schwingungsbedingten dynamischen Kraft senkrecht zur Zeichenebene ausgesetzt, so hat diese in Abhängigkeit vom erzeugten Biegemoment bezüglich der Ebene des Spalts 319 ebenfalls eine dynamische Verwölbung des Blechstreifens 311 zur Folge. Das Ausmaß dieser Verwölbung und die erreichbare Dämpfung sind dabei in hohem Maße sowohl vom Unterschied der zur Zeichenebene senkrechten Abmessung der Kehlnähte 315, 316 gegenüber derjenigen des Blechstreifens 311 abhängig, als auch von der absoluten Länge der Kehlnähte 315, 316.

Ein grundsätzlicher Vorteil der dämpfungswirksamen Schweißverbindungen 307, 321 gegenüber dem in der Deutschen Patentschrift 872895 beschriebenen Dämpfungseffekt in sogenannten Scheuerflächen, liegt bei ersteren in der dämpfungswirksamen Nutzung von schwingungsbedingten kleinsten Normalbewegungen beziehungsweise Blechverwölbungen im Schweißnahtbereich. Dagegen dämpfen in den Scheuerflächen nur die zu ihnen parallelen, im wesentlich geringeren Umfang auftretenden dynamischen Relativbewegungen. Überdies ist die erzielbare Dämpfung der Scheuerflächen von der nur schlecht einstellbaren Vorspannung der sie bildenden Bleche abhängig. Weiterhin erfordert diese Dämpfung stets einen gewissen Mindestbetrag der Schwingungsamplitude des zu dämpfenden Bauteils, da sonst aufgrund der Haftreibung keine dämpfungswirksamen Relativbewegungen in den Scheuerflächen auftreten.

Bei den vorangegangenen Ausführungsbeispielen des Erfindungsgedankens wurde der dämpfungsfähige Fluidspalt stets unmittelbar von den zu dämpfenden, durch druckdichte Schweißnähte verbundene Bleche begrenzt. Es ist aber auch möglich, einen flachen Fugendämpfer mit einer Gesamtdicke von 1 mm, vorzugsweise von einer Bauart ähnlich derjenigen der Fig. 8, zwischen zwei Blechteile zu bringen und letztere durch unterbrochene Schweißnähte beziehungsweise Schweißpunkte und/oder Nieten miteinander zu verbinden. Nach Ausführung dieser Blechverbindungen wird dann in den Fugendämpfer Fluid eingepreßt, wobei er durch die zu dämpfenden Blechteile abgestützt wird.

Ein Fugendämpfer kann also in festen Fugenverbindungen angeordnet sein, die sowohl lösbar sind, wie beispielsweise Schraubenverbindungen, als auch ohne Zerstörung nicht mehr lösbar sind, wie zum Beispiel Schweiß- und Nietverbindungen.

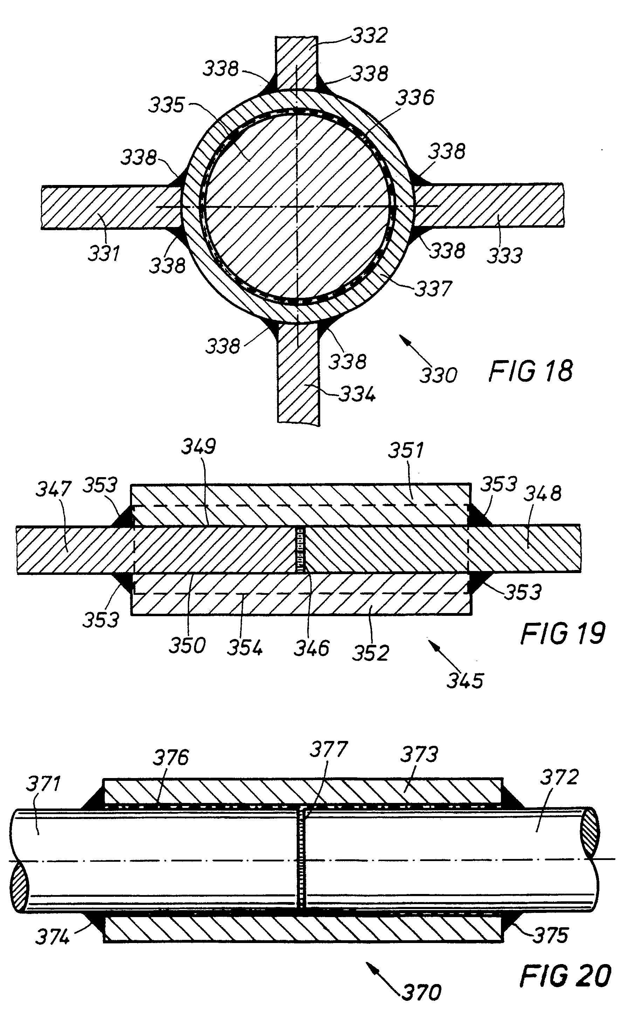

Fig. 18 zeigt den Schnitt durch eine dämpfungswirksame Schweißverbindung 330, die die sich kreuzenden Wandbleche 331-334 über Kehlnähte miteinander verbindet. In dem Rohr 337 befindet sich ein gleichlanger Zylinder 335 von beispielsweise 45 mm Durchmesser. Beide Enden des Rohrs 337 sind mit dem zentrisch angeordneten Zylinder 335 so verschweißt, daß zwischen beiden Bauteilen ein druckdichter, übertrieben groß dargestellter Spalt 336 mit über den Umfang konstanter Dicke von beispielsweise 0.1 mm entsteht. Dieser Spalt wird über ein nicht dargestelltes, in das Rohr 337 eingeschraubtes Rückschlagventil mit Fluid befüllt, bis sich der erforderliche Fluiddruck einstellt.

Treten bei einem oder allen Wandblechen 331-334 Schwingungen auf, die über die Kehlnähte 338 auf das Rohr 337 als dieses lokal deformierende, periodische Kräfte wirksam werden, so hat die über den Umfang des Zylinders 335 ungleichmäßig sich dynamisch ändernde Dicke des mit Fluid gefüllten Spalts 336 einen dämpfungswirksamen Squeeze-Film-Effekt zur Folge. Dieser kann zusätzlich noch beeinflußt werden, indem insbesondere der Zylinder 335 dämpfungswirksame Merkmale anderer Fugendämpfer, beispielsweise derjenigen der Fig. 2 oder 4, erhält.

Die beiden zur Zeichenebene parallelen Enden des Rohrs 337 sind durch die den Spalt 336 abschließenden Schweißnähte sehr verformungssteif und erschweren dadurch die Ausbildung des Squeeze-Film-Effekts. Bei identischen Abmessungen des Rohrs 337 und der Wandbleche 331-334 senkrecht zur Zeichenebene sollen deshalb die Kehlnähte 338 nur bis jeweils etwa der fünffachen Wanddicke des Rohrs 337 an dessen beide Enden ausgeführt werden. Stattdessen bietet es sich auch an, das Rohr 337 und den Zylinder 335 um etwa 10 Wandstärken länger zu bemessen als sich die Wandbleche 331-334 senkrecht zur Zeichenebene erstrecken.

Das Rohr 337 weist den Querschnitt eines zylindrischen Kreisrings auf. Die Dämpfungswirksamkeit der Schweißverbindung 330 ist jedoch an diese Querschnittsform nicht gebunden, so daß beispielsweise auch eine elliptische oder rautenförmige Querschnittsform des die Wandbleche 331-334 verbindenden Rohrs möglich ist, wenn ein in diesem Rohr angeordneter, dem Zylinder 335 funktionsgleicher Stab dieser Querschnittsform angepaßt ist. Wird ein solches Rohr bei der Fluidbefüllung einem Fluiddruck ausgesetzt, so erfährt es eine Ausbeulung, die einen über seinen Umfang ungleichmäßig dicken Fluidspalt entstehen läßt. Wird dagegen der im Rohr befindliche Stab als Hohlzylinder mit eigener, als Rückschlagventil ausgebildeter Fluideinfüllöffnung ausgeführt, so kann er derart mit unter Druck stehendem, vorzugsweise zu einer starren Masse aushärtendem Fluid befüllt werden, daß er ähnlich ausgebeult wird, wie das ihn außen umgebende Rohr. Auf diese Weise läßt sich ein mit Fluid gefüllter Spalt erzielen, der auch bei einem Rohr, das keinen Kreisquerschnitt besitzt, einen über dessen Umfang nahezu konstante Dicke aufweist.

Das Rohr 337 könnte auch entsprechend der Deutschen Auslegeschrift 1049162 mit einer beim Aushärten schrumpfenden, flüssigen Kunststoffmasse befüllt werden und so den Zylinder 335 ersetzen. Dabei stellt sich bei einer nicht kreisförmigen Querschnittsform dieses Rohrs ein über seinen Umfang unterschiedlich dicker Spalt ein, der nach der Befüllung mit unter Druck stehendem Fluid weiter vergrößert wird. Bei gezielter Anwendung dieses Effekts können an dickere Fluidspalte angrenzende Wandbleche elastischer miteinander verbunden werden als Bleche, die über dünnere Fluidspalte steifer aneinander gekoppelt sind.

Die Zentrierung eines derartigen Zylinders 335 könnte durch eine zu ihm parallele, im Rohr 337 zentrisch plazierte Stange erfolgen. Diese ist mit den beiden, in Fig. 18 nicht dargestellten, zur Zeichenebene parallelen, das Rohr 337 abschließenden Stirnblechen verschweißt und verhindert so auch deren zu starke Ausbeulung unter dem Fluiddruck.

Die beschriebene Ausbildung eines dämpfungswirksamen Spalts im Rohr 337 durch Befüllung mit einer aushärtenden Masse ist auch anwendbar bei offenen Profilen, die auf Blechwände derart aufgeschweißt werden, daß sie biegesteife Hohlprofile darstellen.

Fig. 19 zeigt im Schnitt eine erfindungsgemäß ausgebildete, dämpfende Schweißverbindung 345 zweier in einer Ebene liegender, aneinanderstoßender Wandbleche 347, 348. Die Schweißverbindung ist gekennzeichnet durch auf die Wandbleche 347, 348 geschweißte Blechstreifen 351, 352, die die Spalte 349, 350 einschließen und einen von den beiden aneinanderstoßenden Stirnseiten der Wandbleche gebildeten, wesentlich dickeren Spalt 346 begrenzen. Diese Spalte werden genauso wie die Schweißverbindung 321 durch ein beispielsweise im Blechstreifen 351 angeordnetes, nicht dargestelltes Rückschlagventil und zugehörige Bohrungen mit Fluid befüllt. Die Spalte 349, 350 sind dämpfungswirksam bei Biege- und Torsionsschwingungen der Wandbleche 347, 348. Hierbei wirken die Kehlnähte 353 als gelenkartige, fluiddichte Einspannungen der Wandbleche im Sinne einer durch die Dicke der Spalte 349, 350 eingeschränkten Drehbewegung mit zur Zeichenebene senkrechter Drehachse. Deshalb ist der Querschnitt der Kehlnähte 353 nur jeweils so groß, wie dies aufgrund ihrer Belastung durch den Fluiddruck und anderer statischer Kräfte erforderlich ist. Der Spalt 346 verbindet die Spalte 349, 350 und ermöglicht beispielsweise bei einer Verengung des Spalts 349 ein Überströmen von Fluid in den Spalt 350, wobei die Dämpfung auf den Squeeze-Film-Effekt in den Spalten 349, 350 zurückzuführen ist. Damit sich dieser möglichst gut ausbilden kann, ist jedoch eine genügend hohe Beulsteifigkeit der Blechstreifen 351, 352 durch deren ausreichend bemessene Dicke erforderlich. Ansonsten führen schwingungsbedingte dynamische Fluiddruckerhöhungen nur zu einer periodischen Ausbeulung der Blechstreifen, die den dämpfungswirksamen Fluidstrom zwischen den Spalten 349 und 350 reduzieren.

Die Spalte 349, 350 werden abgeschlossen durch parallel zur Zeichenebene verlaufende Schweißnähte, die die Blechstreifen 351, 352 mit den Wandblechen 347, 348 miteinander verbinden und dabei auch den Spalt 346 druckdicht abschließen. Durch diese Schweißnähte sind die Wandbleche an den zur Zeichenebene parallelen Rändern der Blechstreifen fest eingespannt und verhindern dort dämpfungswirksame Dickenänderungen der mit Fluid gefüllten Spalte 349, 350. Eine derartige Schweißverbindung ist nur unter der Bedingung dämpfungswirksam, daß die Wandbleche und Blechstreifen sich in Richtung senkrecht zur Zeichenebene über eine genügende Länge erstrecken. Der versteifende Einfluß der zur Zeichenebene parallelen Schweißnähte beschränkt sich dann nur auf einen relativ kleinen Randbereich der von den Blechstreifen bedeckten, schwingenden Fläche der Wandbleche. Bei in Richtung senkrecht zur Zeichenebene zu kurzen Blechstreifen ist der versteifende Einfluß der genannten Schweißnähte auf die Wandbleche jedoch so stark, daß letztere im schwingenden Zustand keine dämpfungswirksamen Dickenänderungen der Spalte 349, 350 bewirken können.

Werden die Wandbleche 347, 348 senkrecht zur Zeichenebene nicht von anderen Bauteilen oder Blechen begrenzt, sind ihre zur Zeichenebene parallelen Stirnseiten also frei zugänglich, und weisen sie senkrecht zur Zeichenebene dieselbe Länge auf wie die Blechstreifen 351, 352, so können die Spalte 349, 350, 346 senkrecht zur Zeichenebene auch durch zwei zur Zeichenebene parallele Platten abgeschlossen werden. Die Länge dieser Platten ist dann gleich der Breite der Blechstreifen. Eine der Platten ist in Fig. 19 in Draufsicht in Strichlinien dargestellt und mit 354 bezeichnet. Die Platten sind längs ihrer kürzeren Seiten mit den zur Zeichenebene parallelen Stirnflächen der Wandbleche 347, 348 durch zu den Wandblechen senkrecht angeordnete Kehlnähte so verschweißt, daß sie auf der linken und rechten Seite der Blechstreifen jeweils mit den Kehlnähten 353 einen geschlossenen Rechteckring bilden. Dieser liegt jeweils in einer zur Zeichenebene und zu den Wandblechen senkrechten Ebene. Die beiden Platten sind weiterhin durch zu den Spalten 349, 350 und zur Zeichenebene parallel verlaufende und die genannten zwei Rechteckringe verbindende Kehlnähte mit den Blechstreifen 351, 352 verschweißt, wodurch die Spalte 349, 350, 346 druckdicht abgeschlossen sind. Eine derartige Schweißverbindung mit durch Platten 354 begrenzte Fluidspalte hat eine gleichmäßige elastische Einspannung der Wandbleche 347, 348 jeweils längs der zur Zeichenebene senkrechten Kehlnähte 353 zur Folge.

Die Schweißverbindung 345 kann auch als ein Beispiel betrachtet werden für die nachträgliche Dämpfungserhöhung einer Blechkonstruktion. Hierbei sind die Wandbleche 347, 348 durch ein einziges Wandblech ersetzt. Auf dieses sind beidseits die Blechstreifen 351, 352 aufgeschweißt. Die Ausbildung von mit Fluid gefüllten Spalten der gewünschten Dicke kann gemäß Fig. 11 erfolgen durch parallel zu den Kehlnähten 353 an diese angrenzend zwischen den Blechstreifen 351, 352 und dem Wandblech angeordnete Stahlfolienstreifen.

Damit dämpfende Fluidverdrängungen zwischen den zu beiden Seiten des schwingenden Wandblechs angeordneten Fluidspalte auftreten können, müssen entsprechende Verbindungen zwischen beiden Fluidspalten vorhanden sein, deren Funktion bei der Schweißverbindung 345 durch den Spalt 346 erfüllt wird. Es bietet sich hierzu an, im Wandblech längs der Mittellinie der Blechstreifen 351, 352 Bohrungen von beispielsweise 10 mm Durchmesser im Abstand etwa der zehnfachen Wandblechdicke anzubringen. Eine

14

andere Maßnahme, die dämpfungsfähige Fluidströme zuläßt, besteht darin, das zu dämpfende Wandblech oder besser die Blechstreifen 351, 352 mit dämpfungswirksamen Merkmalen beispielsweise der Fig. 2 oder 4 zu versehen. Auch dann ist es jedoch empfehlenswert, beide Fluidspalte durch eine Bohrung von etwa 1 mm Durchmesser zu verbinden, wodurch die Fluidbefüllung von einer einzigen Seite aus erfolgen kann und ein stets gleicher, statischer Druck in beiden Fluidspalten sichergestellt ist.

Um so breiter und biegesteifer die Blechstreifen 351, 352 sind, um so größer können die auftretenden dynamischen Änderungen der Dicke der Fluidspalte sein. Mit zunehmender Breite der Blechstreifen müssen aber auch die Kehlnähte 353 wegen des auf sie lastenden größeren Fluiddrucks dicker ausgeführt werden, was wiederum ihre bereits erläuterte Gelenkfunktion beeinträchtigt.

In gewissen Fällen kann zur Dämpfungserhöhung einer Blechkonstruktion vorhergehend beschriebene Maßnahme sinngemäß nur so ausgeführt werden, daß beispielsweise auf der Außenseite des Wandblechs eines Getriebegehäuses ein Blechstreifen aufgeschweißt wird. Dabei ist jedoch eine zum Gehäuseinneren gerichtete, durch den Fluiddruck bedingte Verwölbung des Wandblechs in Kauf zu nehmen, insbesondere wenn der Blechstreifen dicker beziehungsweise biegesteifer als das Wandblech ist.

Die aufgeführten Beispiele des bei Schweißkonstruktionen anwendbaren Erfindungsgedankens lassen sich selbstverständlich auch in Kombinationen zur Anwendung bringen. So kann beispielsweise das Stegblech 310 von Fig. 17 auch mit dem Blechstreifen 351 verschweißt werden, wie dies sinngemäß auch beim Blechstreifen 352 erfolgen kann. Auf diese Weise entsteht eine Blechkreuzung bei der die Wandbleche 347, 348 eine andere Verbindungssteifigkeit aufweisen als die zu ihnen senkrechten Stegbleche.

Die Schwingungsdämpfung bei Blechkonstruktionen mit Hilfe nach dem allgemeinen Erfindungsgedanken ausgelegter Schweißverbindungen kann sowohl in der Verbindung eines Blechteils mit einem anderen Teil erfolgen, als auch inmitten der schwingenden Fläche eines Blechteils. Grundsätzlich sind jedoch diejenigen Stellen zu bevorzugen, die bei den zu dämpfenden Schwingungen die größten dynamischen Krümmungsänderungen aufweisen.

Fig. 20 zeigt eine dämpfungswirksame Schweißverbindung 370 als Abwandlung der Schweißverbindung von Fig. 19. Sie wird gebildet von einem Rohr 373, das die aneinanderstoßenden zylindrischen Stangen 371, 372 symmetrisch umgibt und dabei den flachen Spalt 377 und den vergrößert dargestellten Ringspalt 376 begrenzt. Letzterer weist beispielsweise eine Dicke von 0.05 mm auf. Die Stangen 371, 372 sind mit dem Rohr 373 an dessen Enden durch druckdichte Kehlnähte 374, 375 miteinander verschweißt, denen wie den Kehlnähten 353 eine Gelenkfunktion zukommen kann. In den vom Rohr 373 begrenzten Hohlraum wird über ein nicht abgebildetes Rückschlagventil Fluid, wie beispielsweise Hydrauliköl, eingepreßt. Führen die Stangen 371, 372 Biegeschwingungen aus, und ist das Rohr 373 durch entsprechende Dickwandigkeit genügend beulsteif, so weist der Ringspalt 376 dynamische Dickenänderungen verbunden mit dämpfungswirksamen Fluidverdrängungen auf. Die Dicke des Ringspalts 376 beschränkt die maximale Winkelverlagerung der Stangen 371, 372 im Rohr 373, die deshalb nach Überschreitung dieses Winkelbetrags eine Biegesteifigkeit wie nahezu eine durchgehende, ungeschwächte Stange gleichen Querschnitts aufweisen.

Die Schweißverbindung 370 kann auch zur Schwingungsdämpfung von Fachwerken oder ähnlichen Bauten eingesetzt werden. Hierzu wird bei Schwingungen des Fachwerks der den stärksten dynamischen Kräften ausgesetzte Fachwerkstab durch die ausreichend dimensionierten, miteinander gemäß Fig. 20 verbundenen Stangen 371, 372 ersetzt. Bei Schwingungen des Fachwerks ergeben sich dann dynamische Dickenänderungen des Spalts 377, die auf dynamischen Längenänderungen des Rohrs 373 beruhen. Zur Maximierung des Dämpfungseffekts sollen die Stangen 371, 372 möglichst zugsteif sein, und soll das Rohr 373 eine möglichst geringe Zugsteifigkeit beziehungsweise große Länge aufweisen.

Erweitert sich der Spalt 377 während einer Schwingungsperiode, so wird dieser ohne Auftreten einer Dampfblasenbildung sofort mit Fluid gefüllt. Hierbei nimmt die Dicke des Ringspalts 376 beziehungsweise die durch den Fluiddruck bedingte elastische Aufweitung des Rohrs 373 geringfügig ab. Die Dämpfungswirkung entsteht ausschließlich durch die Fluidströmung im Ringspalt 376. Der Spalt 377 kann deshalb auch eine Dicke von einigen Millimetern aufweisen. Ein zu dicker Spalt 377 ist jedoch wegen der größeren Fluidsäulenkompressibilität dämpfungsmindernd und deshalb zu vermeiden.

EP 0 244 406 B1

Bezugszeichenliste

| Nr. | Bezeichnung | Nr. | Bezeichnung |
|---|---|---|---|
| 1 | Bauteil | 37 | Spalt |
| 2 | Bauteil | 40 | Platte |
| 3 | Fugenoberfläche | 41 | Platte |
| 4 | Fugenoberfläche | 42 | Fugendämpfer |
| 5 | Spalt | 43 | Bauteil |
| 6 | Platte | 44 | Bauteil |
| 7 | Platte | 45 | Bauteil |
| 8 | Fugendämpfer | 46 | Folienstreifen |
| 9 | Vertiefung | 47 | Folienstreifen |
| 10 | Bauteil | 48 | Spalt |
| 11 | Bauteil | 49 | Kunststoffmasse |
| 12 | Spalt | 54 | Schweißnaht |
| 13 | Bohrung | 55 | Fugendämpfer |
| 14 | Bohrung | 56 | Platte |
| 15 | Schmiernippel | 57 | Platte |
| 16 | Gewindebohrung | 58 | Zylinder |
| 30 | Fugendämpfer | 59 | Schmiernippel |
| 31 | Platte | 60 | Bohrung |
| 32 | Platte | 61 | Gewindebohrung |
| 33 | Spalt | 62 | Kehlnaht |
| 34 | Folie | 63 | Bauteil |
| 35 | Folie | 64 | Bauteil |
| 36 | Fugendämpfer | 65 | Schweißnaht |
| | | 66 | Schraube |
| | | 67 | Schweißnaht |
| | | 68 | Deckel |
| | | 69 | Bohrung |
| | | 70 | Schweißnaht |
| | | 71 | Schweißnaht |
| | | 72 | Platte |
| | | 73 | Polymerbeschichtung |
| | | 74 | Schweißnaht |
| | | 75 | Fugendämpfer |
| | | 76 | Platte |
| | | 77 | Platte |

16

| Nr. | Bezeichnung | Nr. | Bezeichnung |
|-----|-------------|-----|-------------|
| 78 | Folienring | 330 | Schweißverbindung |
| 79 | Folienring | 331 | Wandblech |
| 80 | Schraubendurchgangsöffnung | 332 | Wandblech |
| 81 | Spalt | 333 | Wandblech |
| 90 | Schraubendruckbereich | 334 | Wandblech |
| 91 | Fugenoberfläche | 335 | Zylinder |
| 92 | Bauteil | 336 | Spalt |
| 93 | Fugendämpfer | 337 | Rohr |
| 228 | Ausnehmung | 338 | Kehlnaht |
| 229 | Schraube | 345 | Schweißverbindung |
| 230 | Membran | 346 | Spalt |
| 231 | Membran | 347 | Wandblech |
| 232 | Getriebegehäuse | 348 | Wandblech |
| 233 | Deckel | 349 | Spalt |
| 234 | Bohrung | 350 | Spalt |
| 235 | Auflagefläche | 351 | Blechstreifen |
| 236 | Ring | 352 | Blechstreifen |
| 300 | Wandblech | 353 | Kehlnaht |
| 301 | Stegblech | 354 | Platte |
| 302 | Kehlnaht | 370 | Schweißverbindung |
| 303 | Kehlnaht | 371 | Stange |
| 304 | Spalt | 372 | Stange |
| 305 | Bohrung | 373 | Rohr |
| 306 | Gewindebohrung | 374 | Kehlnaht |
| 307 | Schweißverbindung | 375 | Kehlnaht |
| 310 | Stegblech | 376 | Ringspalt |
| 311 | Blechstreifen | 377 | Spalt |
| 312 | Wandblech | | |
| 313 | Gewindebohrung | | |
| 314 | Bohrung | | |
| 315 | Kehlnaht | | |
| 316 | Kehlnaht | | |
| 317 | Kehlnaht | | |
| 318 | Kehlnaht | | |
| 319 | Spalt | | |
| 320 | Spalt | | |
| 321 | Schweißverbindung | | |

**Patentansprüche**

1. Feste Fugenverbindung von der Art einer
   - Schraubenverbindung,

17

- Nietverbindung,
- Punktschweißverbindung,
- Schweißnaht-, Löt- oder Klebeverbindung mindestens zweier Bauteile, die zueinander einen von den Verbindungsmitteln nicht ausgefüllten, sondern nur zumindest teilweise begrenzten Fugenspalt bilden,
- Kombination zuvor genannter Verbindungsarten,

mit durch schwingungsbedingte Dickenänderungen ihres Fugenspalts konstruktiv erzwungener, dämpfungswirksamer Fluidverdrängung und den folgenden weiteren Merkmalen:

- Im Fugenspalt ist zumindest eine dünne Platte (6, 31, 40, 56, 72, 76) angeordnet, die entweder mit einem der Bauteile (68) oder mit einer weiteren Platte (7, 32, 41, 57, 77) ohne Bewegungsdichtungen druckdicht unter Bildung wenigstens eines Spalts (12, 33, 37, 81) verbunden ist,
- der Spalt (12, 33, 37, 81) ist mit einem unter Druck stehenden Fluid, insbesondere einer Flüssigkeit, gefüllt.

2. Schwingungsdämpfende Flachdichtung, die aus einer dünnen Platte (6, 31, 40, 56, 76) und einer weiteren Platte (7, 32, 41, 57, 77) besteht, die miteinander ohne Bewegungsdichtungen druckdicht unter Bildung wenigstens eines Spalts (12, 33, 37, 81) verbunden sind, wobei die dünne Platte (6, 31, 40, 56, 76) zumindest auf einem Teil ihrer dem Spalt (12, 33, 37, 81) abgewandten Oberfläche eine abdichtende Beschichtung aufweist, und der Spalt im eingebauten, funktionsfähigen Zustand der Flachdichtung mit einem unter Druck stehenden Fluid, insbesondere einer Flüssigkeit, gefüllt ist.

3. Zur Anordnung in einer Fugenverbindung vorgesehener, schwingungsbedingte Fugenspaltdickenänderungen durch konstruktiv erzwungene Fluidverdrängung zur Schwingungsdämpfung nutzender Fugendämpfer, mit den folgenden weiteren Merkmalen:

- Der Fugendämpfer (8, 30, 36, 42, 55, 75, 93) besteht aus einer dünnen Platte (6, 31, 40, 56, 76) und einer weiteren Platte (7, 32, 41, 57, 77), die miteinander ohne Bewegungsdichtungen druckdicht unter Bildung wenigstens eines Spalts (12, 33, 37, 81) verbunden sind,
- die beiden Platten (6, 7, 31, 32, 40, 41, 56, 57, 76, 77) weisen für die die Ebene des Spalts (12, 33, 37, 81) durchdringenden Verbindungsmittel der Fugenverbindung, wie insbesondere Schrauben (66), Nieten, Schweißpunkte oder Schweißnähte, mindestens zwei Aussparungen (80) auf,
- der Spalt (12, 33, 37, 81) ist im eingebauten, funktionsfähigen Zustand des Fugendämpfers (8, 30, 36, 42, 55, 75, 93) mit einem unter Druck stehenden Fluid, insbesondere einer Flüssigkeit, gefüllt.

4. Eine Flachdichtung nach Anspruch 2 beziehungsweise ein Fugendämpfer nach Anspruch 3, dadurch gekennzeichnet, daß auf der Innen- und/oder Außenseite zumindest einer Platte (32, 40) Mittel, zum Beispiel Folien (34, 35) oder Folienstreifen (46, 47), vorgesehen sind, die zumindest eine örtliche Dickenänderung des druckdicht abgeschlossenen Spalts (33, 37) bewirken.

5. Eine Flachdichtung nach Anspruch 2 oder 4 beziehungsweise ein Fugendämpfer nach Anspruch 3 oder 4, dadurch gekennzeichnet, daß auf einer nicht abgestützten Teilfläche einer Platte (56) ein mit einem Rückschlagventil, beispielsweise ein Schmiernippel (59), versehener Einfüllstutzen oder Zylinder (58) angeordnet ist.

6. Feste Fugenverbindung von der Art einer Schweißnaht-, Löt- oder Klebeverbindung oder einer Kombination dieser Verbindungen, deren miteinander verbundene Teile (300, 301, 310, 311, 312, 331, 332, 333, 334, 335, 337, 347, 348, 351, 352, 354, 371, 372, 373) in ihrer Stoßart entweder

- einen Spalt druckdicht einschließen

oder

- einen nicht spaltförmigen Hohlraum druckdicht einschließen, in dem ein seiner Form angepaßter Gegenstand einen Spalt bildend angeordnet ist,

wobei der Spalt (304, 319, 336, 346, 349, 350, 376, 377) jeweils durch zur Fugenverbindung gehörende Verbindungsmittel, wie Schweißnähte (302, 303, 317, 318, 353, 374, 375), Löt- oder Klebnähte, druckdicht abgeschlossen ist,

mit den folgenden weiteren Merkmalen:

Der Spalt (304, 319, 336, 346, 349, 350, 376, 377) ist mit einem unter Druck stehenden Fluid, wie insbesondere einer Flüssigkeit, gefüllt, wobei schwingungsbedingte Dickenänderungen des Spalts (304, 319, 336, 346, 349, 350, 376, 377) durch die so konstruktiv erzwungene Fluidverdrängung dämpfungswirksam genutzt werden.

7. Fugenverbindung nach Anspruch 6, dadurch gekennzeichnet, daß zwischen den den Spalt (304, 319, 336, 346, 349, 350, 376, 377) begrenzenden Bauteilen (300, 301, 310, 311, 312, 331, 332, 333, 334, 335, 337, 347, 348, 351, 352, 354, 371, 372, 373) mindestens ein vorzugsweise aus Metall bestehender Gegenstand in Gestalt einer Folie, eines Folienstreifens, eines Folienrings oder dergleichen angeordnet ist, der an der Stelle seiner Plazierung die Mindestdicke des Spalts festlegt.

8. Fugenverbindung nach Anspruch 6, mit einem Fugenspalt, der gebildet ist durch eine Stoßart ihrer Bleche (331, 332, 333, 334), Rohre und Profile, die einen nicht spaltförmigen Hohlraum druckdicht einschließt, und in dem ein seiner Form angepaßter Gegenstand einen Spalt (336) bildend angeordnet ist, wobei der Gegenstand aus einer in den Hohlraum eingefüllten und anschließend ausgehärteten Flüssigkeit besteht.

## Claims

1. Fixed joint of the kind of a
   - bolted joint,
   - riveted joint,
   - spot-welded joint,
   - welded seam joint, soldered joint or adhesive joint of at least two parts, which are forming a joint gap which is not filled up by the joint means but is only at least partially bordered by them,
   - combination of any of the previously named kinds of joints,
   with constructively enforced damping-effective fluid displacement due to vibration-caused thickness alterations of its joint gap and the following additional features:
   - In the joint gap is placed at least one thin plate (6, 31, 40, 56, 72, 76), which is jointed in a pressure-sealed manner either with one of the parts (68) or with an additional plate (7, 32, 41, 57, 77) without gaskets for parts movable relative to each other, thereby forming at least one gap (12, 33, 37, 81),
   - the gap (12, 33, 37, 81) is filled with a pressurized fluid, especially a liquid.

2. Vibration damping flat gasket consisting of a thin plate (6, 31, 40, 56, 76) and an additional plate (7, 32, 41, 57, 77), which are interconnected in a pressure-sealed manner without gaskets for parts movable relative to each other, thereby forming at least one gap (12, 33, 37, 81), whereby the thin plate (6, 31, 40, 56, 76) has a sealing coating on at least one part of its surface, averted from the gap (12, 33, 37, 81), and in the installed functioning state of the flat gasket the gap is filled with a pressurized fluid, especially a liquid.

3. Joint-damper designated for arrangement in a joint, using vibration-caused thickness alterations of joint gaps for vibration damping by constructively enforced fluid displacement, with the following additional features:
   - The joint-damper (8, 30, 36, 42, 55, 75, 93) consists of a thin plate (6, 31, 40, 56, 76) and an additional plate (7, 32, 41, 57, 77), which are jointed together in a pressure-sealed manner without gaskets for parts movable relative to each other, thereby forming at least one gap (12, 33, 37, 81),
   - the two plates (6, 7, 31, 32, 40, 41, 56, 57, 76, 77) are provided with at least two recesses (80) for the joint means of the joint, as there are especially bolts (66), rivets, welding spots or welding seams, which are penetrating the plane of the gap (12, 33, 37, 81),
   - in the installed functioning state of the joint-damper (8, 30, 36, 42, 55, 75, 93) the gap (12, 33, 37, 81) is filled with a pressurized fluid, especially a liquid.

4. A flat gasket according to Claim 2, respectively a joint-damper according to Claim 3, characterized in that on the inner and/or outer side of at least one plate (32, 40) means are installed, for example foils (34, 35) or foil-stripes (46, 47), which effect at least a local thickness alteration of the pressure-sealed closed gap (33, 37).

5. A flat gasket according to Claim 2 or 4 respectively a joint-damper according to Claim 3 or 4, characterized in that a filler neck or a cylinder (58), provided with a return valve, for example a grease nipple (59), is placed on a non-supported section area of a plate (56).

6. Fixed joint of the kind of a welded seam joint, soldered joint or adhesive joint or a combination of these joints, the interconnected parts (300, 301, 310, 311, 312, 331, 332, 333, 334, 335, 337, 347, 348, 351, 352, 354, 371, 372, 373) of which in their type of butt either
   - enclose a gap in a pressure-sealed manner
   or
   - enclose a non-gap-like hollow space in a pressure-sealed manner, in which an object is placed which is adjusted in its shape for forming a gap,

   whereby the gap (304, 319, 336, 346, 349, 350, 376, 377) is respectively enclosed in a pressure-sealed manner by joint means belonging to the joint, like welded seams (302, 303, 317, 318, 353, 374, 375), soldered seams or adhesive seams,
   with the following additional features:
   The gap (304, 319, 336, 346, 349, 350, 376, 377) is filled with a pressurized fluid, like especially a liquid, whereby vibration-caused thickness alterations of the gap (304, 319, 336, 346, 349, 350, 376, 377) are used damping-effective by the thus constructively enforced fluid displacement.

7. Joint according to Claim 6, characterized in that between the gap (304, 319, 336, 346, 349, 350, 376, 377) bordering parts (300, 301, 310, 311, 312, 331, 332, 333, 334, 335, 337, 347, 348, 351, 352, 354, 371, 372, 373) at least one object is placed preferably consisting of metal and being in the shape of a foil, a foil-stripe, a foil-ring or the like, which determines the minimum thickness of the gap at the location of its positioning.

8. Joint according to Claim 6, with a gap, which is formed by a type of butt of its sheets (331, 332, 333, 334), tubes and profiles, that encloses a non-gap-like hollow space in a pressure-sealed manner, and wherein an object is placed which is adjusted in its shape for building a gap (336), the object consisting of a liquid filled into the hollow space and subsequently cured.

**Revendications**

1. Jonction fixe de l'espèce
   - d'un assemblage par vis,
   - d'une jonction par rivure,
   - d'une jonction par point de soudure,
   - d'une jonction par ligne de soudure, d'une jonction par brasage ou d'une jonction par collage d'au moins deux éléments de construction qui forment une fente de jonction qui n'est pas remplie des moyens de jonction, mais qui est seulement au moins en partie bordée par eux,
   - d une combinaison d'espèces de jonction sus-mentionnés,
   avec un déplacement de fluide effectuant un amortissement qui est constructivement forcé par changements de l'épaisseur de sa fente de jonction causés par des vibrations et les caractéristiques suivantes additionnelles:
   - Au moins une plaque (6, 31, 40, 56, 72, 76) mince est disposée dans la fente de jonction, qui est jointe d'une manière pressurisée à une des éléments de construction (68) ou à une autre plaque (7, 32, 41, 57, 77) sans garnitures d'éléments adaptés à faire des mouvements relatives en formant au moins une fente (12, 33, 37, 81),
   - la fente (12, 33, 37, 81) est remplie d'un fluide sous compression en particulier d'un liquide.

2. Garniture plate amortissant des vibrations, consistant en une plaque (6, 31, 40, 56, 76) mince et une autre plaque (7, 32, 41, 57, 77) qui sont jointes étanchément sans garnitures d'éléments adaptés à faire des mouvements relatives en formant au moins une fente (12, 33, 37, 81), la plaque (6, 31, 40, 56, 76) mince étant pourvue d'une enducation bouchante sur au moins une partie de sa surface avertie de la fente (12, 33, 37, 81) et la fente étant remplie d'un fluide sous compression, en particulier d'un liquide quand la garniture plate est dans un état installé et capable à fonctionner.

3. Amortisseur de jonction étant destiné à être situé dans une jonction utilisant pour l'amortissement de vibration des changements de l'épaisseur de la fente de jonction causés par des vibrations par déplacement de fluide constructivement forcé, ayant les suivantes caractéristiques additionnelles:
   - L'amortisseur de jonction (8, 30, 36, 42, 55, 75, 93) consiste en une plaque (6, 31, 40, 56, 76) mince et une autre plaque (7, 32, 41, 57, 77) qui sont jointes d'une manière pressurisée sans garnitures d'éléments adaptés à faire des mouvements relatives en formant au moins une fente (12, 33, 37, 81),

- les deux plaques (6, 7, 31, 32, 40, 41, 56, 57, 76, 77) ont au moins deux évidements (80) pour les moyens de jonction de la jonction pénétrant la plaine de la fente (12, 33, 37, 81), comme en particulier vis (66), rivets, points de soudure ou lignes de soudure,
- la fente (12, 33, 37, 81) est remplie d'un fluide sous compression en particulier d'un liquide quand l'amortisseur de jonction (8, 30, 36, 42, 55, 75, 93) est dans un état installé et capable à fonctionner.

4. Une garniture plate selon la revendication 2 respectivement un amortisseur de jonction selon la revendication 3, caractérisée en ce que sur la côte intérieure et/ou extérieure d'au moins une plaque (32, 40) des moyens sont prévus, par exemple des feuilles (34, 35) ou des bandes de feuille (46, 47) qui causent au moins un changement d'épaisseur locale de la fente (33, 37) renfermée d'une manière pressurisée.

5. Une garniture plate selon la revendication 2 ou 4 respectivement un amortisseur de jonction selon la revendication 3 ou 4, caracterisée en ce que sur une surface partielle non-supportée d'une plaque (56) une tubulure de remplissage ou cylindre (58) est disposée qui a un clapet antiretour par exemple un raccord fileté de graissage (59).

6. Jonction fixe de l'espèce d'une jonction par ligne de soudure, d'une jonction par brasage ou d'une jonction par collage ou d'une combinaison de ces jonctions dont les éléments joints (300, 301, 310, 311, 312, 331, 332, 333, 334, 335, 337, 347, 348, 351, 352, 354, 371, 372, 373) dans leur mode de jonction
   - enferment une fente d'une manière pressurisée
   ou
   - enferment un espace pas de forme d'une fente d'une manière pressurisée, dans lequel un objet adapté a sa forme de l'espace est disposé en formant une fente,
   la fente (304, 319, 336, 346, 349, 350, 376, 377) étant renfermé d'une manière pressurisée par des moyens de jonction appartenant à la jonction, comme lignes de soudure (302, 303, 317, 318, 353, 374, 375), lignes de brasage ou lignes de collage,
   ayant les suivantes caractéristiques additionnelles:
   La fente (304, 319, 336, 346, 349, 350, 376, 377) est remplie d'un fluide sous compression comme en particulier un liquide, des changements d'épaisseur de la fente (304, 319, 336, 346, 349, 350, 376, 377) conditionnés par des vibrations ainsi étant utilisée effectuant un amortissement en consequence du déplacement de fluide ainsi constructivement forcé.

7. Jonction selon la revendication 6, caractérisée en ce que entre les éléments de construction (300, 301, 310, 311, 312, 331, 332, 333, 334, 335, 337, 347, 348, 351, 352, 354, 371, 372, 373) limitant la fente (304, 319, 336, 346, 349, 350, 376, 377) au moins un objet de préférence consistant en métal et ayant la forme d'une feuille, d'une bande de feuille, d'un anneau de feuille ou au d'autres choses semblables, qui à la place de sa location détermine l'épaisseur minimale de la fente.

8. Jonction selon la revendication 6, comprenant une fente de jonction qui est formée par une espèce de jointure de ses tôles (331, 332, 333, 334), tubes ou profiles, qui enferme d'une manière pressurisée un espace pas de forme d'une fente, dans lequel un objet adapté à sa forme est disposé en formant une fente (336), cet objet consistant en un liquide versé dans l'espace et consécutivement duré.

FIG 1

FIG 2

FIG 3

FIG 4

FIG 5

FIG 6

FIG 7

FIG 8

FIG 9

FIG 10

*FIG 11*

*FIG 12*

*FIG 13*

*FIG 14*

25

FIG 15

FIG 16

FIG 17

FIG 18

FIG 19

FIG 20